# EUROPEAN PATENT APPLICATION

(11) **EP 4 697 837 A1**
(43) Date of publication of application: **18.02.2026**
(21) Application number: 25710294.7
(22) Date of filing: 07.03.2025
(51) Int. Cl.: H04W 72/1273, H04W 76/15, H04W 72/54, H04W 4/80, H04M 1/72409

(54) **ELECTRONIC DEVICE AND METHOD FOR ADAPTIVELY CHANGING PERIODIC TRANSMISSION, AND NON-TRANSITORY COMPUTER-READABLE STORAGE MEDIUM**

(30) Priority: 20.06.2024 KR 20240080494; 03.07.2024 KR 20240087855
(71) Applicant: Samsung Electronics Co., Ltd, Suwon-si, Gyeonggi-do 16677 (KR)
(72) Inventor: JIN, Juyeon, Suwon-si, Gyeonggi-do 16677 (KR); RYU, Kyusang, Suwon-si, Gyeonggi-do 16677 (KR)
(74) Representative: Gulde & Partner
(86) International application number: PCT/KR2025/003065
(87) International publication number: WO 2025/263742

(57) **Abstract**

An electronic device is provided. The electronic device may comprise communication circuitry for Bluetooth. The electronic device may comprise at least one processor comprising processing circuitry. The electronic device may comprise memory storing instructions and comprising one or more storage media. The electronic device and an external electronic device are interconnected via Bluetooth. A signal is provided from the external electronic device to the electronic device when the external electronic device established an additional connection via Bluetooth to another electronic device.

## Description

### [Technical Field]

The following descriptions relate to an electronic device, a method, and a non-transitory computer-readable storage medium for adaptively changing a periodic transmission.

### [Background Art]

Compared to legacy Bluetooth^{®} (or classic Bluetooth), Bluetooth^{®} low energy (BLE) may provide reduced power consumption and provide a wide communication range between connected devices. BLE may be provided on an industrial, scientific, and medical (ISM) radio band.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to an aspect of the disclosure, an electronic device according to claim 1 is provided. The electronic device may comprise communication circuitry for Bluetooth. The electronic device may comprise at least one processor comprising processing circuitry. The electronic device may comprise memory, storing instructions. The memory may comprise one or more storage media. The instructions, when executed by the at least one processor individually or collectively, may cause the electronic device to perform, using the communication circuitry, through a first communication link between the electronic device and an external electronic device, a first periodic transmission to the external electronic device, according to a first transmission cycle, the first periodic transmission for outputting audio via a speaker of the external electronic device. The instructions, when executed by the at least one processor individually or collectively, may cause the electronic device to receive, using the communication circuitry, through the first communication link, from the external electronic device, a signal that may indicate that the external electronic device is operating in a multi-point state in which a second communication link is established between the external electronic device and another electronic device while the first communication link is established. The instructions, when executed by the at least one processor individually or collectively, may cause the electronic device to, based on the signal, perform, using the communication circuitry, through the first communication link, a second periodic transmission to the external electronic device, according to a second transmission cycle longer than the first transmission cycle, the second periodic transmission for outputting audio via the speaker of the external electronic device.

According to an aspect of the disclosure, an external electronic device according to claim 7 is provided. The external electronic device may comprise communication circuitry for Bluetooth. The external electronic device may comprise at least one processor comprising processing circuitry. The external electronic device may comprise memory storing instructions which when executed by the at least one processor individually or collectively, may cause the external electronic device to perform, using the communication circuitry, through a first communication link between the external electronic device and an electronic device, a first periodic transmission to the electronic device, according to a first transmission cycle, the first periodic transmission for outputting audio via a speaker of the external electronic device. The instructions, when executed by the at least one processor individually or collectively, may cause the electronic device to provide, using the communication circuitry, through the first communication link, to the electronic device, a signal that may indicate that the external electronic device is operating in a multi-point state in which a second communication link is established between the external electronic device and another electronic device while the first communication link is established between the external electronic device and the electronic device.

According to an aspect of the disclosure, a method according to claim 8 is provided. The method may be executed in an electronic device comprising communication circuitry for Bluetooth. The method may comprise performing, using the communication circuitry, through a first communication link between the electronic device and an external electronic device, a first periodic transmission to the external electronic device, according to a first transmission cycle, the first periodic transmission for outputting audio via a speaker of the external electronic device. The method may comprise receiving, using the communication circuitry, through the first communication link, from the external electronic device, a signal that may indicate that the external electronic device is operating in a multi-point state in which a second communication link is established between the external electronic device and another electronic device while the first communication link is established. The method may comprise, based on the signal, performing, using the communication circuitry, through the first communication link, a second periodic transmission to the external electronic device, according to a second transmission cycle longer than the first transmission cycle, the second periodic transmission for outputting audio via the speaker of the external electronic device.

According to an aspect of the disclosure, a method according to claim 14 is provided. The method may be executed by an external electronic device with communication circuitry for Bluetooth. The method may comprise performing, using the communication circuitry, through a first communication link between the external electronic device and an electronic device, a first periodic transmission to the external electronic device, according to a first transmission cycle, the first periodic transmission for outputting audio via a speaker of the external electronic device. The method may comprise providing, using the communication circuitry, through the first communication link, to the electronic device, a signal that may indicate that the external electronic device is operating in a multi-point state in which a second communication link is established between the external electronic device and another electronic device while the first communication link is established between the electronic device (101) and the external electronic device.

According to an aspect of the disclosure, a non-transitory computer-readable storage medium according to a first alternative of claim 15 is provided. The non-transitory computer-readable storage medium may store one or more programs. The one or more programs may include instructions that may, when executed by an electronic device with communication circuitry for Bluetooth, cause the electronic device to perform, using the communication circuitry, through a first communication link between the electronic device and an external electronic device, a first periodic transmission to the external electronic device, according to a first transmission cycle, the first periodic transmission for outputting audio via a speaker of the external electronic device. The one or more programs may include instructions that may, when executed by the electronic device, cause the electronic device to receive, using the communication circuitry, through the first communication link, from the external electronic device, a signal that may indicate that the external electronic device is operating in a multi-point state in which a second communication link is established between the external electronic device and another electronic device while the first communication link is established between the electronic device and the external electronic device. The one or more programs may include instructions that may, when executed by the electronic device, cause the electronic device to, based on the signal, perform, using the communication circuitry, through the first communication link, a second periodic transmission to the external electronic device, according to a second transmission cycle longer than the first transmission cycle, the second periodic transmission for outputting audio via the speaker of the external electronic device.

According to an aspect of the disclosure, a non-transitory computer-readable storage medium according to a second alternative of claim 15 is provided. The non-transitory computer-readable storage medium may store instructions, which, when executed by an external electronic device with communication circuitry for Bluetooth, may include instructions that may cause the external electronic device to perform, using the communication circuitry, through a first communication link between the external electronic device and an electronic device, a first periodic transmission from the external electronic device, according to a first transmission cycle, the first periodic transmission for outputting audio via a speaker of the external electronic device. The instructions, when executed by the electronic device, may include instructions that may cause the external electronic device to provide, using the communication circuitry, through the first communication link, to the electronic device, a signal that may indicating that the external electronic device is operating in a multi-point state in which a second communication link is established between the external electronic device and another electronic device while the first communication link is established between the electronic device and the external electronic device.

Alternatively or additionally, the signal may indicate that another external electronic device paired with the external electronic device is being not worn while performing the first periodic transmission.

Alternatively or additionally, the one or more programs, when executed by the electronic device, may include instructions cause the electronic device to receive, using the communication circuitry, through the communication link, from the external electronic device, the signal indicating that another external electronic device paired with the external electronic device is being not worn while performing the first periodic transmission.

Embodiments of the disclosure are presented in the dependent claims.

According to an embodiment, e.g. of the electronic device, the first communication link may be a communication link for a first communication scheme. The instructions, when executed by the at least one processor individually or collectively, may further cause the electronic device to: before receiving the signal, establish, using the communication circuitry, a third communication link between the electronic device and the external electronic device for a second communication scheme different from the first communication scheme; and based on the signal, lengthen, using the communication circuitry, a connection interval of the third communication link.

According to an embodiment, e.g. of the electronic device, the instructions, when executed by the at least one processor individually or collectively, may further cause the electronic device to: based on the signal, cease the first periodic transmission.

According to an embodiment, e.g. of the method, the first communication link may be a communication link for a first communication scheme. The method may comprise: before receiving the signal, establishing, using the communication circuitry, a third communication link between the electronic device and the external electronic device for a second communication scheme different from the first communication scheme, and based on the signal, lengthening, using the communication circuitry, a connection interval of the third communication link.

### [Description of the Drawings]

FIG. 1 illustrates an example of a wireless environment including an electronic device and an external electronic device.
FIG. 2 is a schematic view of an exemplary electronic device.
FIG. 3 is a schematic view of an exemplary external electronic device.
FIG. 4 is a flowchart illustrating a method of adaptively changing (or adjusting) a periodic transmission for outputting audio through a speaker of an external electronic device.
FIG. 5 illustrates an example of ceasing a first periodic transmission and performing a second periodic transmission.
FIG. 6 illustrates an example of a user interface including an object for adaptively changing a periodic transmission for outputting audio through a speaker of an external electronic device according to whether a signal is received from an external electronic device.
FIG. 7 illustrates an example of signaling between an electronic device and an external electronic device that is performed to adaptively change a periodic transmission for outputting audio through a speaker of the external electronic device when a communication link is established between the external electronic device and another electronic device.
FIG. 8 illustrates an example of signaling between an electronic device and an external electronic device that is performed to adaptively change a periodic transmission for outputting audio through a speaker of the external electronic device when another external electronic device that is not being worn is identified.
FIG. 9 is a flowchart illustrating a method of ceasing a second periodic transmission and performing a third periodic transmission.
FIG. 10 illustrates an example of ceasing a second periodic transmission and performing a third periodic transmission.
FIG. 11 is a flowchart illustrating a method performed in an electronic device to output audio through a speaker of an external electronic device.
FIG. 12 is a flowchart illustrating a method of ceasing a second periodic transmission and performing a first periodic transmission according to change in a quality of a communication link changed during a second periodic transmission performed before receiving a signal.
FIGS. 13 and 14 illustrate an example of timing for ceasing a second periodic transmission and performing a first periodic transmission.
FIG. 15 is a block diagram of an electronic device in a network environment according to various embodiments.

### [Mode for Invention]

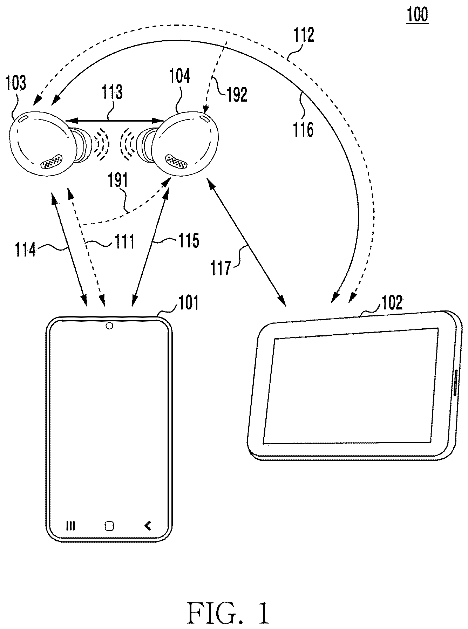

FIG. 1 illustrates an example of a wireless environment including an electronic device and an external electronic device.

Referring to FIG. 1, a wireless environment 100 may include an electronic device 101, another electronic device 102, an external electronic device 103, and another external electronic device 104.

The electronic device 101 in the wireless environment 100 may be a device transmitting, to the external electronic device 103, packets for audio to be outputted through a speaker of the external electronic device 103 (or each of the external electronic device 103 and the other external electronic device 104). The electronic device 101 may be a device providing one or more audio streams to the external electronic device 103. The electronic device 101 may be a device performing audio streaming to the external electronic device 103. For example, the electronic device 101 may be described as an audio source device. For example, the electronic device 101 may obtain (or generate) an audio signal (or a digital audio signal) through a pulse code modulation (PCM). For example, the electronic device 101 may obtain (or generate) audio frames by dividing the audio signal. For example, the electronic device 101 may provide the audio frames to the external electronic device 103 through the packets transmitted to the external electronic device 103. For example, the electronic device 101 may be a smartphone, a tablet, a laptop computer, a desktop computer, or a television. However, it is not limited thereto.

The other electronic device 102 in the wireless environment 100 may be a device capable of transmitting, to the external electronic device 103, packets for audio to be outputted through the speaker of the external electronic device 103 (or each of the external electronic device 103 and the other external electronic device 104). The other electronic device 102 may be a device providing one or more audio streams to the external electronic device 103. The other electronic device 102 may be a device performing audio streaming to the external electronic device 103. For example, the other electronic device 102 may be described as another audio source device. For example, the other electronic device 102 may obtain (or generate) an audio signal (or a digital audio signal) through a PCM. For example, the other electronic device 102 may obtain (or generate) audio frames by dividing the audio signal. For example, the other electronic device 102 may provide the audio frames to the external electronic device 103 through the packets transmitted to the external electronic device 103.

In the descriptions below, the electronic device 101 may be described as a device transmitting, to external electronic device 103, via a first communication link (e.g., a first communication link 111), packets for audio to be outputted through the speaker of the external electronic device 103 (or each of the external electronic device 103 and the other external electronic device 104). In the descriptions below, the other electronic device 102 may be described as a device establishing a second communication link (e.g., a second communication link 112) between the other electronic device 102 and the external electronic device 103 while the electronic device 101 transmits the packets to the external electronic device 103. In the descriptions below, the other electronic device 102 may be described as a device performing operations to maintain the second communication link (e.g., the second communication link 112) while the electronic device 101 transmits the packets to the external electronic device 103, to transmit packets for audio to be outputted through the speaker of the external electronic device 103 (or each of the external electronic device 103 and the other external electronic device 104) based on the event. In a portion of embodiments described below, the other electronic device 102 may not be included in the wireless environment 100.

The external electronic device 103 in the wireless environment 100 may be a device receiving, from the electronic device 101, packets for audio to be outputted through the speaker of the external electronic device 103 (or each of the external electronic device 103 and the other external electronic device 104). The external electronic device 103 may be a device outputting audio through a speaker of the external electronic device 103 using the received packets. The external electronic device 103 may be a device obtaining one or more audio streams from the electronic device 101. For example, the external electronic device 103 may be described as an audio sink device. For example, the external electronic device 103 may be ear buds, a headset, or a wireless speaker. However, it is not limited thereto.

The other external electronic device 104 in the wireless environment 100 may be a device outputting audio through a speaker of the other external electronic device 104 by using one or more of packets (e.g., for audio to be outputted through the speaker of each of the external electronic device 103 and the other external electronic device 104) transmitted from the electronic device 101 to the external electronic device 103. For example, the other external electronic device 104 may output audio through the speaker of the other external electronic device 104 by sniffing the one or more of the packets transmitted from the electronic device 101 through the first communication link (e.g., the first communication link 111) between the electronic device 101 and the external electronic device 103. For example, the other external electronic device 104 may be a device obtaining one or more audio streams from the electronic device 101. For example, the other external electronic device 104 may be described as an audio sink device. For example, the other external electronic device 104 may be earbuds, a headset, or a wireless speaker. However, it is not limited thereto.

The other external electronic device 104 may be paired with the external electronic device 103. For example, the external electronic device 103 may be a device outputting audio on a first audio channel, and the other external electronic device 104 may be a device outputting audio on a second audio channel different from the first audio channel while the audio on the first audio channel is outputted from the external electronic device 103. As a non-limiting example, the external electronic device 103 may be a device worn on the user's left ear, and the other external electronic device 104 may be a device worn on the user's right ear. In a portion of embodiments described below, the other external electronic device 104 may not be included in the wireless environment 100. In a portion of embodiments described below, the other external electronic device 104 may be described as a device not worn by the user, unlike the external electronic device 103 described as a device worn by the user.

For example, the electronic device 101 may establish, with the external electronic device 103, a first communication link 111 between the external electronic device 103 and the electronic device 101. As a non-limiting example, the first communication link 111 may be a communication link for a first communication scheme (e.g., legacy Bluetooth or classic Bluetooth). The first communication link 111 may be usable for packets transmitted from the electronic device 101 to the external electronic device 103 for audio to be outputted through the speaker of the external electronic device 103 (or each of the external electronic device 103 and the other external electronic device 104).

For example, the other electronic device 102 may establish, with the external electronic device 103, a second communication link 112 between the external electronic device 103 and the other electronic device 102. As a non-limiting example, the second communication link 112 may be a communication link for the first communication scheme. The second communication link 112 may be usable for packets transmitted from the other electronic device 102 to the external electronic device 103 for audio to be outputted through the speaker of the external electronic device 103 (or each of the external electronic device 103 and the other external electronic device 104). For example (or in the descriptions below), the second communication link 112 may be established after the first communication link 111 is established. For example (or in the descriptions below), the second communication link 112 may be established and maintained while audio streaming from the electronic device 101 to the external electronic device 103 (or the external electronic device 103 and the other external electronic device 104) is performed through the first communication link 111.

For example, the external electronic device 103 may establish, with the other external electronic device 104, a third communication link 113 between the external electronic device 103 and the other external electronic device 104. As a non-limiting example, the third communication link 113 may be a communication link for a second communication scheme (e.g., Bluetooth low energy (BLE)) different from the first communication scheme. As a non-limiting example, the third communication link 113 may be usable to inform the other external electronic device 104 of a state of the external electronic device 103. As a non-limiting example, the third communication link 113 may be usable to inform the external electronic device 103 of a state of the other external electronic device 104. As a non-limiting example, the third communication link 113 may be usable for sniffing of the other external electronic device 104, as indicated by arrows 191. For example, the third communication link 113 may be usable to transmit, from the external electronic device 103, to another external electronic device 104, information on the first communication link 111 (e.g., including Bluetooth address, Bluetooth piconet clock, link key, used channel map, logical transport (LT) address, information on service discovery protocol (SDP), and/or information on supported feature). As a non-limiting example, the third communication link 113 may be usable for sniffing of the other external electronic device 104, as indicated by arrows 192. For example, the third communication link 113 may be usable to transmit, from the external electronic device 103, to the other external electronic device 104, information on the second communication link 112 (e.g., including Bluetooth address, Bluetooth piconet clock, link key, used channel map, logical transport (LT) address, information on service discovery protocol (SDP), and/or information on supported feature).

For example, the electronic device 101 may establish, with the external electronic device 103, a fourth communication link 114 between the external electronic device 103 and the electronic device 101. As a non-limiting example, the fourth communication link 114 may be a communication link for the second communication scheme. For example, the external electronic device 103 may advertise (or broadcast) advertising packets (or advertising signals), based on an event. As a non-limiting example, the event may include obtaining power from a case device (e.g., cradle) for accommodating the external electronic device 103 and the other external electronic device 104, identifying that a door of the case device accommodating the external electronic device 103 is opened, identifying that the external electronic device 103 is worn by the user, and/or identifying an input to a physical button of the external electronic device 103 or a physical button of the case device. The electronic device 101 may establish a fourth communication link 114 with the external electronic device 103, based on receiving one or more of the advertising packets. The electronic device 101 may establish the first communication link 111 with the external electronic device 103, based on receiving one or more of the advertising packets. For example, unlike the fourth communication link 114, the first communication link 111 may be a communication link for one or more audio streams. For example (or in the descriptions below), the fourth communication link 114 may be maintained while audio streaming from the electronic device 101 to the external electronic device 103 (or the external electronic device 103 and the other external electronic device 104) is performed through the first communication link 111.

For example, the electronic device 101 may establish, with the other external electronic device 104, a fifth communication link 115 between the electronic device 101 and the other external electronic device 104. As a non-limiting example, the fifth communication link 115 may be a communication link for the second communication scheme. For example, the other external electronic device 104 may advertise (or broadcast) advertising packets (or advertising signals) based on the event. The electronic device 101 may establish the fifth communication link 115 with the other external electronic device 104, based on receiving one or more of the advertising packets. As a non-limiting example (or in the descriptions below), the fifth communication link 115 may be maintained while audio streaming from the electronic device 101 to the external electronic device 103 (or the external electronic device 103 and the other external electronic device 104) is performed through the first communication link 111.

For example, the other electronic device 102 may establish, with the external electronic device 103, a sixth communication link 116 between the external electronic device 103 and the other electronic device 102. As a non-limiting example, the sixth communication link 116 may be a communication link for the second communication scheme. For example, the external electronic device 103 may advertise (or broadcast) advertising packets (or advertising signals) based on the event. The other electronic device 102 may establish the sixth communication link 116 with the external electronic device 103, based on receiving one or more of the advertising packets. The other electronic device 102 may establish the second communication link 112 with the external electronic device 103, based on receiving one or more of the advertising packets. For example, the second communication link 112 may be a communication link for one or more audio streams, unlike the sixth communication link 116. For example (or in the descriptions below), the sixth communication link 116 may be maintained while audio streaming from the electronic device 101 to the external electronic device 103 (or the external electronic device 103 and the other external electronic device 104) is performed through the first communication link 111.

For example, the other electronic device 102 may establish, with the other external electronic device 104, a seventh communication link 117 between the other external electronic device 104 and the other electronic device 102. As a non-limiting example, the seventh communication link 117 may be a communication link for the second communication scheme. For example, the other external electronic device 104 may advertise (or broadcast) advertising packets (or advertising signals) based on the event. The other electronic device 102 may establish the seventh communication link 117 with the other external electronic device 104, based on receiving one or more of the advertising packets. As a non-limiting example (or in the descriptions below), the seventh communication link 117 may be maintained while audio streaming from the electronic device 101 to the external electronic device 103 (or the external electronic device 103 and the other external electronic device 104) is performed through the first communication link 111.

For example, while audio streaming from the electronic device 101 to the external electronic device 103 is performed through the first communication link 111, the second communication link 112, the third communication link 113, the fourth communication link 114, and the sixth communication link 116 (or the second communication link 112) may be maintained. For example, available resources for the audio streaming from electronic device 101 to external electronic device 103 performed through the first communication link 111 may be limited due to resources used by maintaining the second communication link 112, the third communication link 113, the fourth communication link 114, and the sixth communication link 116 (or the second communication link 112). For example, performing the audio streaming from the electronic device 101 to the external electronic device 103 through the first communication link 111 using the limited resources may reduce a quality of audio service. For example, outputting audio through the speaker of the external electronic device 103 may be ceased according to performing the audio streaming from the electronic device 101 to the external electronic device 103 through the first communication link 111 using the limited resources. For example, sound cutting off may occur within the external electronic device 103 according to performing the audio streaming from the electronic device 101 to the external electronic device 103 through the first communication link 111 using the limited resources. For example, in order to reduce the occurrence of the sound cutting off, the electronic device 101 may identify that the second communication link 112 is established based on a signal received from the external electronic device 103 and adaptively change a periodic transmission of at least one packet for the audio streaming from the electronic device 101 to the external electronic device 103 performed through the first communication link 111 based on the identification.

For example, while audio streaming from the electronic device 101 to the external electronic device 103 is performed through the first communication link 111, a state of the other external electronic device 104 may be changed from a state of being worn by a user to a state of not being worn by a user. For example, unlike a user wearing both the external electronic device 103 and the other external electronic device 104, a user wearing the external electronic device 103 among the external electronic device 103 and the other external electronic device 104 may not fully (or accurately) feel a quality of sound provided through the audio streaming from the electronic device 101 to the external electronic device 103. For example, the electronic device 101 may identify that the other external electronic device 104 from among the external electronic device 103 and the other external electronic device 104 is not being worn by the user based on a signal received from the external electronic device 103, and adaptively change a periodic transmission of at least one packet for the audio streaming from the electronic device 101 to the external electronic device 103 performed through the first communication link 111 based on the identification.

For example, as a quality of the sound provided through the audio streaming from the electronic device 101 to the external electronic device 103 becomes higher, power consumption of a rechargeable battery of the external electronic device 103 may increase. In order to reduce the power consumption of the rechargeable battery, the electronic device 101 may identify a level of the rechargeable battery of the external electronic device 103 lower than a reference level based on a signal received from the external electronic device 103, and adaptively change a periodic transmission of at least one packet for the audio streaming from the electronic device 101 to the external electronic device 103 performed through the first communication link 111 based on the identification.

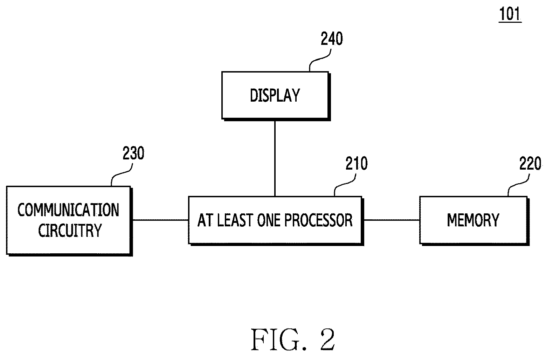

FIG. 2 is a schematic view of an exemplary electronic device.

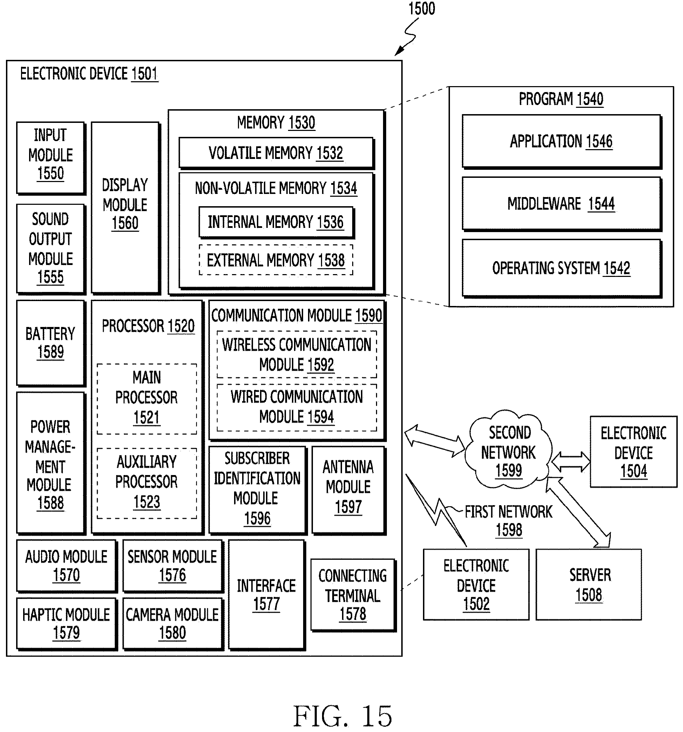

Referring to FIG. 2, an electronic device 101 may include at least one processor 210, memory 220, communication circuitry 230, and a display 240. The electronic device 101 may include at least a portion of the electronic device 1501 of FIG. 15, or may correspond to at least a portion of the electronic device 1501 of FIG. 15.

The at least one processor 210 may include processing circuitry. The at least one processor 210 may include a single processor or multiple processors. For example, the at least one processor 210 may include a central processing unit (CPU) (e.g., including processing circuitry). For example, the at least one processor 210 may further include a display processing unit (DPU) (e.g., including processing circuitry). For example, the at least one processor 210 may further include a neural processing unit (NPU) (e.g., including processing circuitry). However, it is not limited thereto. When the at least one processor 210 includes multiple processors, the at least one processor 210 may perform processing in a distributed manner. The at least one processor 210 may be configured to individually or collectively execute instructions stored in the memory 220. The at least one processor 210 may include at least a portion of the processor 1520 of FIG. 15, or may correspond to at least a portion of the processor 1520 of FIG. 15.

The memory 220 may store instructions executable by the at least one processor 210. The instructions may cause the electronic device 101 to perform operations described with reference to FIG. 1 and FIGS. 4 to 14. The instructions may be executed individually or collectively by the at least one processor 210. The memory 220 may include one or more storage mediums. The memory 220 may include at least a portion of the memory 1530 of FIG. 15 or may correspond to at least a portion of the memory 1530 of FIG. 15.

The communication circuitry 230 may be used for audio streaming from the electronic device 101 to the external electronic device 103. The communication circuitry 230 may be usable for Bluetooth. The communication circuitry 230 may support the first communication scheme and the second communication scheme described with reference to FIG. 1. As a non-limiting example, the communication circuitry 230 may further support a wireless fidelity (Wi-Fi) communication scheme. The communication circuitry 230 may be controlled by the at least one processor 210. The communication circuitry 230 may include at least a portion of the wireless communication module 1592 of FIG. 15, or may correspond to at least a portion of the wireless communication module 1592 of FIG. 15.

The display 240 may be used to display visual information (e.g., image, data, information, or user interface). The display 240 may be controlled by the at least one processor 210. The display 240 may include at least a portion of the display module 1560 of FIG. 15, or may correspond to at least a portion of the display module 1560 of FIG. 15.

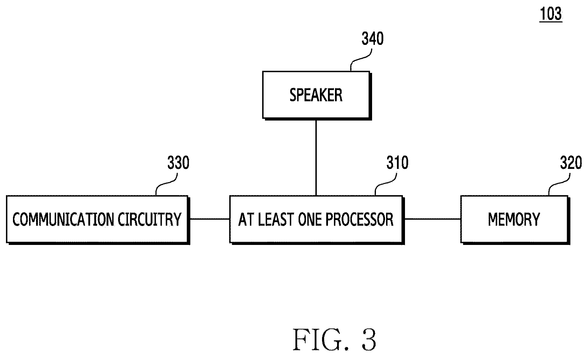

FIG. 3 is a schematic view of an exemplary external electronic device.

Referring to FIG. 3, the external electronic device 103 may include at least one processor 310, memory 320, communication circuitry 330, and a speaker 340. The external electronic device 103 may include at least a portion of the electronic device 102 of FIG. 15, or may correspond to at least a portion of the electronic device 102 of FIG. 15.

The at least one processor 310 may include processing circuitry. The at least one processor 310 may include a single processor or multiple processors. The at least one processor 310 may be configured to individually or collectively execute instructions stored in the memory 320.

The memory 320 may store instructions executable by the at least one processor 310. The instructions may cause the external electronic device 103 to perform operations described with reference to FIG. 1 and FIGS. 4 to 14. The instructions may be executed individually or collectively by the at least one processor 310. The memory 320 may include one or more storage mediums.

The communication circuitry 330 may be used for audio streaming from the electronic device 101 to the external electronic device 103. The communication circuitry 330 may be usable for Bluetooth. The communication circuitry 330 may support the first communication scheme and the second communication scheme described with reference to FIG. 1. The communication circuitry 330 may be controlled by the at least one processor 310.

The speaker 340 may be used to output audio according to audio streaming from the electronic device 101 to the external electronic device 103. The speaker 340 may be controlled by the at least one processor 310.

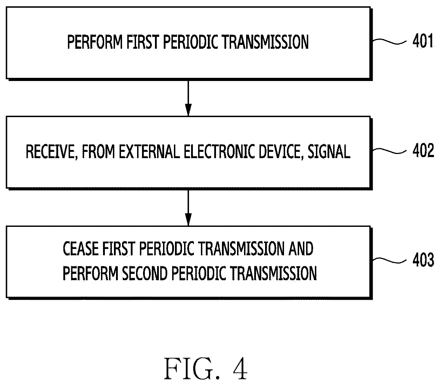

FIG. 4 is a flowchart illustrating a method of adaptively changing (or adjusting) a periodic transmission for outputting audio through a speaker of an external electronic device.

Referring to FIG. 4, in operation 401, an electronic device 101 (or at least one processor 210) may perform, through a first communication link 111, a first periodic transmission to an external electronic device 103 for outputting audio via a speaker 340 of the external electronic device 103, according to a first transmission cycle. The electronic device 101 may perform the first periodic transmission for audio streaming from the electronic device 101 to the external electronic device 103 performed through the first communication link 111. The electronic device 101 may transmit, to the external electronic device 103, through the first communication link 111, at least one packet for the audio streaming in each of first time intervals corresponding to the first transmission cycle while performing the first periodic transmission. As a non-limiting example, each of the at least one packet transmitted in each of the first time intervals may include audio data for outputting ultra high quality (UHQ) audio. As a non-limiting example, the first periodic transmission may be performed before a second communication link 112 is established. As a non-limiting example, the first periodic transmission may be performed while a third communication link 113, a fourth communication link 114, and a fifth communication link 115 are maintained.

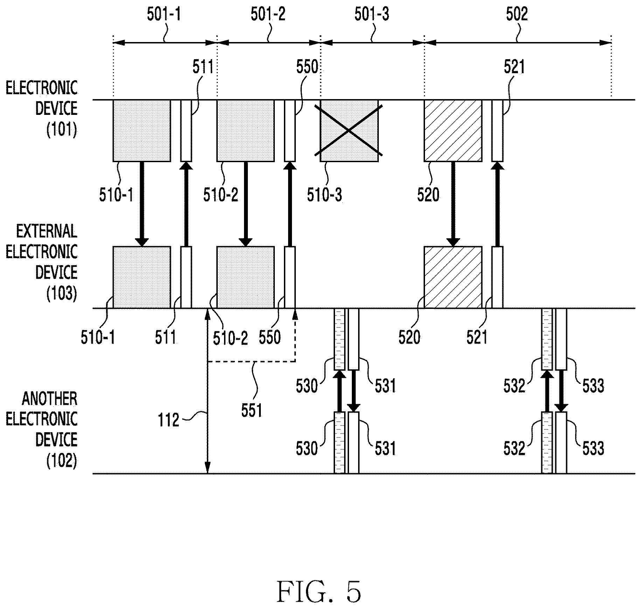

The first periodic transmission will be described in more detail with reference to FIG. 5.

FIG. 5 illustrates an example of ceasing a first periodic transmission and performing a second periodic transmission.

Referring to FIG. 5, the electronic device 101 may perform the first periodic transmission according to the first transmission cycle. For example, the electronic device 101 may transmit at least one packet 510-1 to the external electronic device 103 in a time interval 501-1 (e.g., corresponding to the first transmission cycle), which is one of the first time intervals described with reference to FIG. 4 while performing the first periodic transmission. As a non-limiting example, each of the at least one packet 510-1 transmitted within the time interval 501-1 may include audio data for supporting UHQ. As a non-limiting example, each of the at least one packet 510-1 transmitted within the time interval 501-1 may be a 2-DH5 packet. For example, a size of the audio data may be about 600 bytes. For example, the first transmission cycle (or a length of the time interval 501-1) may be up to 3 milliseconds (ms), up to 6 ms, up to 9 ms, up to 12 ms or up to 15 ms. For example, the electronic device 101 may transmit, to the external electronic device 103, through the first communication link 111, the at least one packet 510-1, within the time interval 501-1, at a transmission rate of about 584 kilobytes per second (kbps).

The external electronic device 103 may receive the at least one packet 510-1 from the electronic device 101 within the time interval 501-1. The external electronic device 103 may transmit, to the electronic device 101, an acknowledge (or acknowledgement) signal 511 based on successfully receiving the at least one packet 510-1.

The electronic device 101 may receive the acknowledge signal 511 from the external electronic device 103 within the time interval 501-1.

Referring back to FIG. 4, in operation 402, the electronic device 101 may receive, from the external electronic device 103, through the first communication link 111, a signal, while performing the first periodic transmission according to the first transmission cycle. The signal may be described as a signal causing the electronic device 101 to cease the first periodic transmission and to perform a second periodic transmission (e.g., operation 403) to the external electronic device 103. The signal may be described as a signal causing the electronic device 101 to change a periodic transmission to the external electronic device 103 by ceasing the first periodic transmission and performing the second periodic transmission.

The signal may be transmitted from the external electronic device 103 to the electronic device 101 through the first communication link 111, based on identifying that a condition is satisfied in the external electronic device 103. The satisfied condition may include establishing a second communication link 112 between the external electronic device 103 and another electronic device 102, which is another audio source device, while performing the first periodic transmission. A state of the external electronic device 103 establishing the first communication link 111 and the second communication link 112 may be described as a multi-point state. For example, the external electronic device 103 may operate in the multi-point state while the first communication link 111 and the second communication link 112 are established. For example, the multi-point state of the external electronic device 103 may be described as a state in which the second communication link 112 is established while the first communication link 111 is established. The satisfied condition may include identifying that the other external electronic device 104 is not being worn while performing the first periodic transmission. For example, a state in which the other external electronic device 104 is not being worn and the external electronic device 103 is being worn may be described as a single wearing state. The satisfied condition may include that a level of a rechargeable battery of the external electronic device 103 is lower than a reference level. The satisfied condition may include that a ratio of errors in header error check (HEC) of packets (e.g., the at least one packet) received from the electronic device 101 while performing the first periodic transmission is higher than a threshold ratio. The satisfied condition may include that a ratio of error in cyclic redundancy check (CRC) of packets (e.g., the at least one packet) received from the electronic device 101 while performing the first periodic transmission is higher than a threshold ratio. The satisfied condition may include that a received signal strength indicator (RSSI) of at least a portion of packets received from the electronic device 101 while performing the first periodic transmission is lower than a reference value. The satisfied condition may include that a retransmission rate caused while performing the first periodic transmission is higher than a reference value. The satisfied condition may include that the number of communication links related to the external electronic device 103 is greater than a reference number.

In operation 403, the electronic device 101 may perform a second periodic transmission to the external electronic device 103, according to a second transmission cycle longer than the first transmission cycle, based on the signal, the second periodic transmission for ceasing the first periodic transmission and outputting the audio through the speaker 340 of the external electronic device 103 through the first communication link 111. The electronic device 101 may perform the second periodic transmission for the audio streaming. For example, the amount of resources consumed for the second periodic transmission may be less than the amount of resources consumed for the first periodic transmission. The electronic device 101 may transmit, to the external electronic device 103, through the first communication link 111, at least one packet for the audio streaming within each of second time intervals corresponding to the second periodic transmission while performing the second periodic transmission. As a non-limiting example, each of the at least one packet transmitted within each of the second time intervals may include audio data for outputting audio of UHQ. As a non-limiting example, the second periodic transmission may be performed after the second communication link 112 is established. As a non-limiting example, the second periodic transmission may be performed while the second communication link 112, the third communication link 113, the fourth communication link 114, and the fifth communication link 115 are maintained.

Referring to FIG. 5, the electronic device 101 may transmit at least one packet 510-2 within a time interval 501-2 (e.g., corresponding to the first transmission cycle), which is one of the first time intervals, while performing the first periodic transmission according to the first transmission cycle. As a non-limiting example, each of the at least one packet 510-2 transmitted within the time interval 501-2 may include audio data for supporting UHQ. A size of the audio data included in the at least one packet 510-2 transmitted within the time interval 501-2 may be substantially identical to a size of the audio data included in the at least one packet 510-1 transmitted within the time interval 501-1. As a non-limiting example, each of the at least one packet 510-2 transmitted within the time interval 501-2 may be a 2-DH5 packet. For example, a size of the audio data may be about 600 bytes. For example, the first transmission cycle (or a length of the time interval 501-2) may be up to 3 ms, up to 6 ms, up to 9 ms, up to 12 ms or up to 15 ms. For example, the electronic device 101 may transmit, to the external electronic device 103, through the first communication link 111, the at least one packet 510-2, within the time interval 501-2, at a transmission rate of about 584 (kbps).

The external electronic device 103 may receive, from the electronic device 101, the at least one packet 510-2 within the time interval 501-2. The external electronic device 103 may identify that the condition described with reference to operation 402 of FIG. 4 is satisfied. The external electronic device 103 may transmit, to the electronic device 101, a signal 550, which is the signal described with reference to operation 402 of FIG. 4, based on successfully receiving the at least one packet 510-2 and identifying that the condition is satisfied. The signal 550 may further indicate that the at least one packet 510-2 is successfully received. However, it is not limited thereto. For example, the signal 550 may be another signal distinct from an acknowledge signal for the at least one packet 510-2. For example, the signal 550 may be transmitted from the external electronic device 103 to the electronic device 101 before an acknowledge signal for the at least one packet 510-2 is transmitted from the external electronic device 103 to the electronic device 101. For example, the signal 550 may be transmitted from the external electronic device 103 to the electronic device 101 after an acknowledge signal for the at least one packet 510-2 is transmitted from the external electronic device 103 to the electronic device 101.

The electronic device 101 may receive the signal 550 from the external electronic device 103 within the time interval 501-2.

The electronic device 101 may cease the first periodic transmission and perform the second periodic transmission, based on the signal 550. For example, a periodic transmission to the external electronic device 103 performed through the first communication link 111 may be changed from the first periodic transmission to the second periodic transmission. For example, the second periodic transmission may be performed according to the second transmission cycle longer than the first transmission cycle. For example, the electronic device 101 may refrain from transmitting at least one packet 510-3 within a time interval 501-3, which is one of the first time intervals corresponding to the first transmission cycle. For example, in a case that the signal 550 is received from the external electronic device 103 in a state in which transmitting the at least one packet 510-3 within the time interval 501-3 is scheduled in the electronic device 101, the electronic device 101 may cancel transmitting the at least one packet 510-3 within the time interval 501-3. For example, the electronic device 101 may transmit, to the external electronic device 103, at least one packet 520 within a time interval 502, which is one of second time intervals corresponding to the second transmission cycle, based on the signal 550. As a non-limiting example, each of the at least one packet 520 transmitted within the time interval 502 may include audio data for supporting UHQ.

For example, a size of the audio data included in each of the at least one packet 520 transmitted within the time interval 502 may be substantially identical to a size of the audio data included in each of the at least one packet 510-1 (or the at least one packet 510-2) transmitted within the time interval 501-1 (or the time interval 501-2). For example, a size of the audio data included in each of the at least one packet 520 transmitted within the time interval 502 may be different from a size of the audio data included in each of the at least one packet 510-1 (or the at least one packet 510-2) transmitted within the time interval 501-1 (or the time interval 501-2).

For example, the number of audio frames included in each of packets transmitted to the external electronic device while performing the first periodic transmission may be less than the number of audio frames included in each of packets transmitted to the external electronic device while performing the second periodic transmission.

For example, the number of at least one packet (e.g., the at least one packet 510-1 or the at least one packet 510-2) transmitted to the external electronic device 103 within each (e.g., the time interval 501-1 or the time interval 501-2) of the first time intervals corresponding to the first transmission cycle while performing the first periodic transmission may be identical to the number of at least one packet (e.g., the at least one packet 520) transmitted to the external electronic device 103 within each (e.g., the time interval 502) of the second time intervals corresponding to the second transmission cycle while performing the second periodic transmission. For example, a type (e.g., 2-DH5 packet) of the at least one packet (e.g., the at least one packet 510-1 or the at least one packet 510-2) transmitted to the external electronic device 103 within each (e.g., the time interval 501-1 or the time interval 501-2) of the first time intervals while performing the first periodic transmission may be identical to a type (e.g., 2-DH5 packet) of the at least one packet (e.g., the at least one packet 520) transmitted to the external electronic device 103 within each (e.g., the time interval 502) of the second time intervals while performing the second periodic transmission. For example, the number of at least one audio frame included in each of the at least one packet (e.g., the at least one packet 510-1 or the at least one packet 510-2) transmitted to the external electronic device 103 within each (e.g., the time interval 501-1 or the time interval 501-2) of the first time intervals while performing the first periodic transmission may be less than the number of audio frames included in each of the at least one packet (e.g., the at least one packet 520) transmitted to the external electronic device 103 within each (e.g., the time interval 502) of the second time intervals while performing the second periodic transmission. As a non-limiting example, a size of the audio data in the at least one packet transmitted to the external electronic device 103 within each (e.g., the time interval 502) of the second time intervals while performing the second periodic transmission may be about 600 bytes. For example, the second transmission cycle (or a length of the time interval 502) may be up to 6 ms, up to 12 ms, up to 18 ms, up to 24 ms or up to 30 ms. The length of the second transmission cycle may correspond to the length of the first transmission cycle multiplied by a factor that is larger than 1. For example, the factor may be up to 1,5, up to 2, up to 2,5 or up to 3. For example, the electronic device 101 may transmit, to the external electronic device 103, through the first communication link 111, the at least one packet 520, within the time interval 502, at a transmission rate of about 291 (kbps).

For example, the number of at least one packet (e.g., the at least one packet 510-1 or the at least one packet 510-2) transmitted to the external electronic device 103 within each (e.g., the time interval 501-1 or the time interval 501-2) of the first time intervals corresponding to the first transmission cycle while performing the first periodic transmission may be identical to the number of at least one packet (e.g., the at least one packet 520) transmitted to the external electronic device 103 within each (e.g., time interval 502) of the second time intervals corresponding to the second transmission cycle while performing the second periodic transmission. For example, a size of each of the at least one packet (e.g., the at least one packet 510-1 or the at least one packet 510-2) transmitted to the external electronic device 103 within each (e.g., the time interval 501-1 or the time interval 501-2) of the first time intervals while performing the first periodic transmission may be larger than a size of each of the at least one packet (e.g., the at least one packet 520) transmitted to the external electronic device 103 within each (e.g., the time interval 502) of the second time intervals while performing the second periodic transmission. For example, a type (e.g., 2-DH5 packet) of the at least one packet (e.g., the at least one packet 510-1 or the at least one packet 510-2) transmitted to the external electronic device 103 within each (e.g., the time interval 501-1 or the time interval 501-2) of the first time intervals while performing the first periodic transmission may be different from a type (e.g., 2-DH3 packet) of the at least one packet (e.g., the at least one packet 520) transmitted to the external electronic device 103 within each (e.g., the time interval 502) of the second time intervals while performing the second periodic transmission.

For example, the number of at least one packet (e.g., the at least one packet 510-1 or the at least one packet 510-2) transmitted to the external electronic device 103 within each (e.g., the time interval 501-1 or the time interval 501-2) of the first time intervals corresponding to the first transmission cycle while performing the first periodic transmission may be less than the number of at least one packet (e.g., the at least one packet 520) transmitted to the external electronic device 103 within each (e.g., the time interval 502) of the second time intervals corresponding to the second transmission cycle while performing the second periodic transmission. For example, a size of each of the at least one packet (e.g., the at least one packet 510-1 or the at least one packet 510-2) transmitted to the external electronic device 103 within each (e.g., the time interval 501-1 or the time interval 501-2) of the first time intervals while performing the first periodic transmission may be larger than a size of each of the at least one packet (e.g., the at least one packet 520) transmitted to the external electronic device 103 within each (e.g., the time interval 502) of the second time intervals while performing the second periodic transmission. For example, a type (e.g., 2-DH5 packet) of the at least one packet (e.g., the at least one packet 510-1 or the at least one packet 510-2) transmitted to the external electronic device 103 within each (e.g., the time interval 501-1 or the time interval 501-2) of the first time intervals while performing the first periodic transmission may be different from a type (e.g., 2-DH3 packet) of the at least one packet (e.g., the at least one packet 520) transmitted to the external electronic device 103 within each (e.g., the time interval 502) of the second time intervals while performing the second periodic transmission.

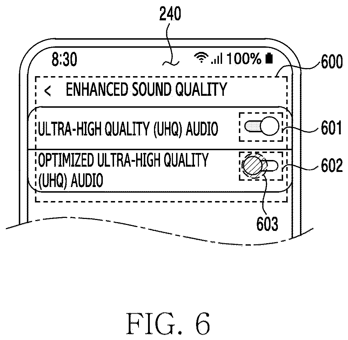

Referring back to FIG. 4, operation 403 may be executed or performed on a condition that a setting of the electronic device 101 related to audio streaming is enabled. The setting of the electronic device 101 will be described in more detail with reference to FIG. 6.

FIG. 6 illustrates an example of a user interface including an object for adaptively changing a periodic transmission for outputting of audio through a speaker of an external electronic device according to whether a signal is received from an external electronic device.

Referring to FIG. 6, the electronic device 101 may display, on the display 240, a user interface 600. The user interface 600 may include an object 601 and an object 602.

The object 601 may be used (or usable) to enable or disable outputting of audio of UHQ via a speaker of the electronic device 101 or a speaker (e.g., the speaker 340) of an external electronic device (e.g., the external electronic device 103). For example, the object 601 in a first state included in the user interface 600 may indicate enabling outputting of audio of UHQ. For example, the electronic device 101 may perform operation 401 while the object 601 is within the first state. For example, the electronic device 101 may refrain from performing operation 401, while the object 601 is within a second state.

The object 602 may be used (or usable) to enable or disable adaptively changing of a periodic transmission to an external electronic device (e.g., the external electronic device 103) while enabling audio of UHQ. For example, since the object 602 is used to enable or disable adaptively changing of the periodic transmission while enabling audio of UHQ, a change in a state of the object 602 may be disabled while the object 601 is in the second state.

For example, the object 602 in the second state included in the user interface 600 may indicate disabling adaptively changing the periodic transmission. For example, the electronic device 101 may perform operation 401, while the object 601 is in the first state and the object 602 is in the second state. For example, the electronic device 101 may receive the signal from the external electronic device 103, as in operation 402, while performing the first periodic transmission according to operation 401. For example, the electronic device 101 may refrain from performing operation 403, based on the object 602 in the second state, independently of receiving the signal.

For example, a state of the object 602 may be changed from the second state to the first state, based on an input 603. For example, the object 602 in the first state included in the user interface 600 may indicate enabling adaptively changing of the periodic transmission. For example, the electronic device 101 may perform operation 401, while the object 601 is in the first state and the object 602 is in the first state. For example, the electronic device 101 may receive the signal from the external electronic device 103, as in operation 402, while performing the first periodic transmission according to operation 401. For example, the electronic device 101 may perform operation 403 based on the object 602 in the first state and the signal. For example, the electronic device 101 may adaptively change the periodic transmission by ceasing (or terminating) the first periodic transmission according to operation 403 and performing the second periodic transmission.

As described above, the electronic device 101 may adaptively change a periodic transmission to the external electronic device 103, performed to output audio of UHQ through the speaker 340 of the external electronic device 103, from the first periodic transmission to the second periodic transmission. For example, the second periodic transmission is common with the first periodic transmission in terms of being a periodic transmission for outputting audio of UHQ, but the amount of resources (e.g., time resources and/or frequency resources) for the second periodic transmission may be less than the amount of resources (e.g., time resources and/or frequency resources) for the first periodic transmission. For example, the electronic device 101 may reduce the amount of resources for outputting audio of UHQ based on a state related to the external electronic device 103.

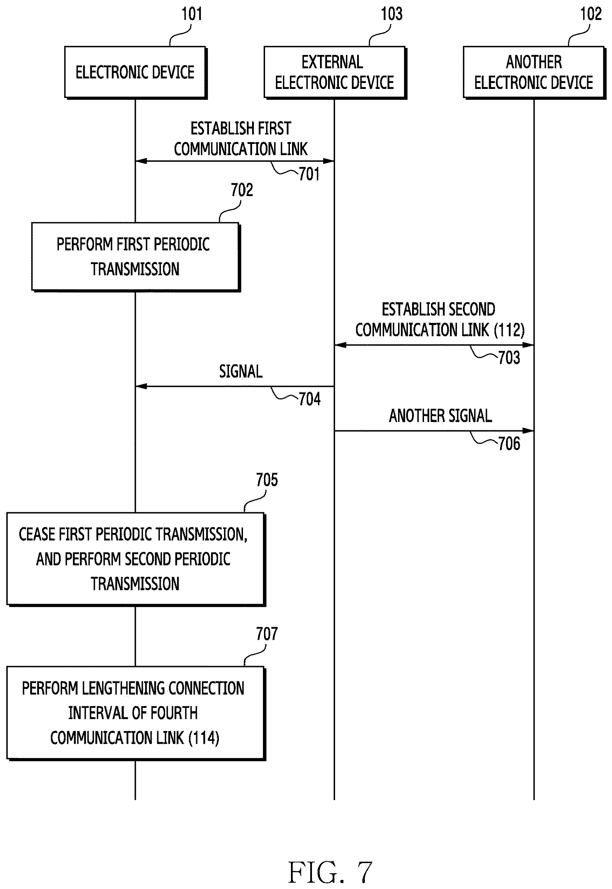

FIG. 7 illustrates an example of signaling between an electronic device and an external electronic device that is performed to adaptively change a periodic transmission for outputting audio through a speaker of the external electronic device when a communication link is established between the external electronic device and another electronic device.

Referring to FIG. 7, in operation 701, the electronic device 101 and the external electronic device 103 may establish a first communication link 111. For example, the first communication link 111 may be established through operations described with reference to FIG. 1.

In operation 702, the electronic device 101 may perform the first periodic transmission, as in operation 401 of FIG. 4. For example, the electronic device 101 may transmit, to the external electronic device 103, through the first communication link 111, at least one packet, within each of the first time intervals described with reference to FIGS. 4 and 5, according to the first transmission cycle.

In operation 703, the other electronic device 102 and the external electronic device 103 may establish a second communication link 112 while the first periodic transmission is performed by the electronic device 101. For example, the second communication link 112 may be established through operations described with reference to FIG. 1.

In operation 704, the external electronic device 103 may transmit, to the electronic device 101, through the first communication link 111, the signal described with reference to operation 402 of FIG. 4, based on the second communication link 112 established while performing the first periodic transmission. As a non-limiting example, the signal may indicate that the external electronic device 103 is operating in the multi-point state. As a non-limiting example, the signal may include information indicating that the second communication link 112 is established. As a non-limiting example, the signal may correspond to the signal 550 described with reference to FIG. 5. The electronic device 101 may receive the signal from the external electronic device 103 through the first communication link 111 while performing the first periodic transmission.

In operation 705, based on the signal received from the external electronic device 103, the electronic device 101 may cease (or terminate) the first periodic transmission, and perform the second periodic transmission. As a non-limiting example, resources for audio streaming from the electronic device 101 to the external electronic device 103 may be limited due to resources for the second communication link 112 (or resources for maintaining the second communication link 112). Since the limited resources for the audio streaming from the electronic device 101 to the external electronic device 103 may reduce a quality of the audio streaming from the electronic device 101 to the external electronic device 103, the electronic device 101 may change a periodic transmission to the external electronic device 103 to the second periodic transmission performed using a smaller amount of resources than the amount of resources for the first periodic transmission, based on the signal received from the external electronic device 103.

For example, referring back to FIG. 5, the other electronic device 102 and the external electronic device 103 may establish the second communication link 112 while the electronic device 101 performs the first periodic transmission. For example, the external electronic device 103 may transmit, to the electronic device 101, the signal 550, based on establishing the second communication link 112, as indicated by arrows 551. For example, the signal 550 may cause the electronic device 101 to cease the first periodic transmission and to perform the second periodic transmission.

As a non-limiting example, the second communication link 112 established while the electronic device 101 performs the first periodic transmission may not be used for audio streaming from the other electronic device 102 to the external electronic device 103. For example, the audio streaming from the other electronic device 102 to the external electronic device 103 may not start after the second communication link 112 is established. For example, the audio streaming from the other electronic device 102 to the external electronic device 103 is not started, but the other electronic device 102 may transmit, to the external electronic device 103, through the second communication link 112, a packet 530, in order to maintain the second communication link 112 for the audio streaming from the other electronic device 102 to the external electronic device 103. For example, the packet 530 for maintaining the second communication link 112 may be a packet without pair load. For example, the packet 530 may be a POL packet. For example, the packet 530 may be a packet requiring confirmation of the external electronic device 103. The external electronic device 103 may receive, from the other electronic device 102, through the second communication link 112, the packet 530. For example, the external electronic device 103 may transmit, to the other electronic device 102, through the second communication link 112, an acknowledge signal 531, based on receiving the packet 530. For example, the other electronic device 102 may receive, from the external electronic device 103, through the second communication link 112, the acknowledge signal 531.

For example, since the electronic device 101 ceases the first periodic transmission based on the signal 550, the electronic device 101 may refrain from transmitting at least one packet 510-3 to the external electronic device 103 through the first communication link 111 within a time interval 501-3. For example, although the time interval 501-3 overlaps with a first time at which the packet 530 is transmitted from the other electronic device 102 to the external electronic device 103 and a second time at which the acknowledge signal 531 is transmitted from the external electronic device 103 to the other electronic device 102, the first periodic transmission within the time interval 501-3 is ceased based on the signal 550, so the electronic device 101 may reduce a probability that operations for audio streaming from the electronic device 101 to the external electronic device 103 and operations for audio streaming from the other electronic device 102 to the external electronic device 103 conflict with each other. For example, the electronic device 101 may cease the first periodic transmission and perform the second periodic transmission based on the signal 550, in order to robustly perform the audio streaming from the electronic device 101 to the external electronic device 103 and robustly maintain the second communication link 112.

For example, the electronic device 101 may transmit, to the external electronic device 103, through the first communication link 111, at least one packet 520, within the time interval 502, according to the second periodic transmission. For example, the external electronic device 103 may receive, from the electronic device 101, through the first communication link 111, the at least one packet 520, within the time interval 502. For example, the external electronic device 103 may transmit, to the electronic device 101, through the first communication link 111, an acknowledge signal 521, within the time interval 502. As a non-limiting example, the number of audio frames included in each of the at least one packet 520 may be greater than the number of at least one audio frame included in each of the at least one packet 510-1 transmitted within the time interval 501-1. As a non-limiting example, the number of the audio frames included in each of the at least one packet 520 may be greater than the number of at least one audio frame included in each of at least one packet 510-2 transmitted within the time interval 501-2. For example, since the number of the audio frames in each of the at least one packet 520 is greater than the number of the at least one audio frame in each of the at least one packet 510-1 and the number of the at least one audio frame in each of the at least one packet 510-2, a playback time of audio outputted through the speaker 340 of the external electronic device 103 according to successfully receiving the at least one packet 520 may be longer than a playback time of audio outputted through the speaker 340 of the external electronic device 103 according to successfully receiving the at least one packet 510-1 and a playback time of audio outputted through the speaker 340 of the external electronic device 103 according to successfully receiving the at least one packet 510-2, respectively. For example, the electronic device 101 may provide robust audio streaming with respect to establishing the second communication link 112 by ceasing the first periodic transmission and performing the second periodic transmission based on the signal 550.

The other electronic device 102 may transmit, to the external electronic device 103, through the second communication link 112, a packet 532, in order to maintain the second communication link 112 for the audio streaming from the other electronic device 102 to the external electronic device 103. For example, the packet 532 for maintaining the second communication link 112 may be a packet without pair load. For example, the packet 532 may be a POL packet. For example, the packet 532 may be a packet requiring confirmation of the external electronic device 103. The external electronic device 103 may receive the packet 532 from the other electronic device 102 through the second communication link 112. For example, the external electronic device 103 may transmit, to the other electronic device 102, through the second communication link 112, the acknowledge signal 533, based on receiving the packet 532. For example, the other electronic device 102 may receive, from the external electronic device 103, through the second communication link 112, the acknowledge signal 533.

For example, according to the second periodic transmission performed based on the signal 550, a time at which the packet 532 is transmitted from the other electronic device 102 to the external electronic device 103 and a time at which the acknowledge signal 533 is transmitted from the external electronic device 103 to the other electronic device 102 may not overlap with a time at which the at least one packet 520 is transmitted from the electronic device 101 to the external electronic device 103 within the time interval 502 and a time at which the acknowledge signal 521 is transmitted from the external electronic device 103 to the electronic device 101 within the time interval 502. For example, the electronic device 101 may assist in maintaining the second communication link 112 by performing the second periodic transmission based on the signal 550.

As a non-limiting example, in operation 706, the external electronic device 103 may transmit, to the other electronic device 102, through the second communication link 112, another signal, based on establishing the second communication link 112. For example, audio streaming from the electronic device 101 to the external electronic device 103 is being performed through the first communication link 111, and the external electronic device 103 may transmit, to the other electronic device 102, the other signal for changing a mode for the second communication link 112. For example, the other signal may be a signal requesting to apply a sniff mode with respect to the second communication link 112. For example, the external electronic device 103 may transmit the other signal to the other electronic device 102 so that audio streaming from the electronic device 101 to the external electronic device 103 is performed robustly.

Although not illustrated in FIG. 7, as an example, the external electronic device 103 may transmit, to the other external electronic device 104, through the third communication link 113, a signal for lengthening a connection interval of the third communication link 113, based on establishing the second communication link 112, so that audio streaming from the electronic device 101 to the external electronic device 103 is performed robustly. For example, the amount of resources for maintaining the third communication link 113 may be reduced according to the lengthened connection interval of the third communication link 113. For example, since the amount of resources for maintaining the third communication link 113 is reduced according to the lengthened connection interval of the third communication link 113, the electronic device 101 may allocate additional resources for audio streaming from the electronic device 101 to the external electronic device 103. For example, the external electronic device 103 may transmit, to the other electronic device 102, through a sixth communication link 116, a signal for lengthening a connection interval of the sixth communication link 116, based on establishing the second communication link 112, so that audio streaming from the electronic device 101 to the external electronic device 103 is performed robustly. Lengthening the connection interval of the sixth communication link 116 may be caused by the other signal in operation 706, according to embodiments. However, it is not limited thereto. For example, the amount of resources for maintaining the sixth communication link 116 may be reduced according to the connection interval of the sixth communication link 116. For example, since the amount of resources for maintaining the sixth communication link 116 is reduced according to the lengthened connection interval of the sixth communication link 116, the electronic device 101 may allocate additional resources for audio streaming from the electronic device 101 to the external electronic device 103.

Although not illustrated in FIG. 7, as an example, when the first communication link 111 is used for audio streaming to the external electronic device 103 and the second communication link 112 is not used for audio streaming to the external electronic device 103, the external electronic device 103 may ignore a packet received from the other electronic device 102 through the second communication link 112 to receive at least one packet received from the electronic device 101 through the first communication link 111. However, it is not limited thereto.

As a non-limiting example, in operation 707, the electronic device 101 may perform lengthening a connection interval of a fourth communication link 114 based on a signal received in operation 704. For example, operation 707 may be performed to robustly perform audio streaming from the electronic device 101 to the external electronic device 103. For example, the amount of resources for maintaining the fourth communication link 114 may be reduced according to the lengthened connection interval of the fourth communication link 114. For example, since the amount of resources for maintaining the fourth communication link 114 is reduced according to the lengthened connection interval of the fourth communication link 114, the electronic device 101 may allocate additional resources for audio streaming from the electronic device 101 to the external electronic device 103.

Although not illustrated in FIG. 7, when audio streaming from the other electronic device 102 to the external electronic device 103 is initiated, audio streaming from the electronic device 101 to the external electronic device 103 may be ceased. For example, when audio streaming from the other electronic device 102 to the external electronic device 103 is ceased, the electronic device 101 may resume audio streaming from the electronic device 101 to the external electronic device 103. For example, when the second communication link 112 is maintained after audio streaming from the other electronic device 102 to the external electronic device 103 is ceased, the electronic device 101 may perform (or resume) the second periodic transmission according to the second transmission cycle.

As described above, the electronic device 101 may robustly perform providing one or more audio streams to the external electronic device 103 by ceasing the first periodic transmission and performing the second periodic transmission, based on the second communication link 112 that is (additionally) established while providing one or more audio streams to the external electronic device 103.

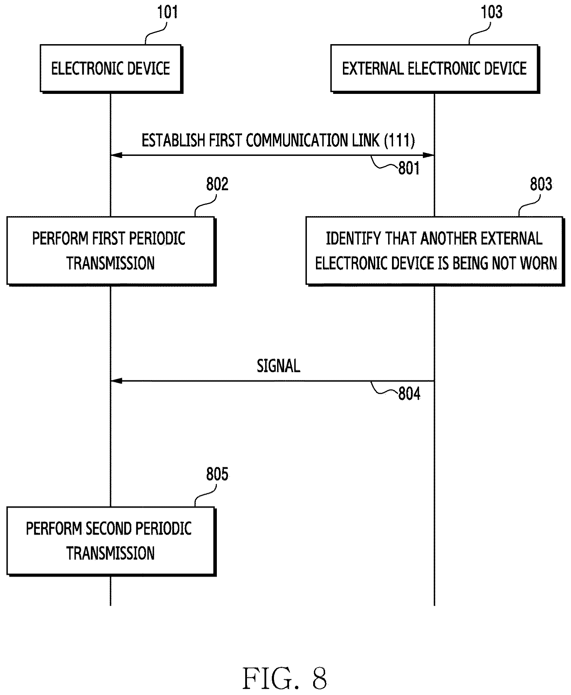

FIG. 8 illustrates an example of signaling between an electronic device and an external electronic device that is performed to adaptively change a periodic transmission for outputting audio through a speaker of the external electronic device when another external electronic device that is not being worn is identified.

Referring to FIG. 8, in operation 801, the electronic device 101 and the external electronic device 103 may establish a first communication link 111. For example, the first communication link 111 may be established through operations described with reference to FIG. 1.

In operation 802, the electronic device 101 may perform the first periodic transmission, as in operation 401 of FIG. 4. For example, the electronic device 101 may transmit, to the external electronic device 103, through the first communication link 111, at least one packet, within each of the first time intervals described with reference to FIGS. 4 and 5, according to the first transmission cycle.

In operation 803, the external electronic device 103 may identify that the other external electronic device 104 is being not worn. For example, the external electronic device 103 may perform operation 803, based on receiving information on a changed state (e.g., a state of being not worn that is changed from a state of being worn) of the other external electronic device 104 from the other external electronic device 104 through the third communication link 113. For example, the external electronic device 103 may perform operation 803, based on receiving information indicating that the other external electronic device 104 is accommodated in the case device from the case device described with reference to FIG. 1. However, it is not limited thereto.

In operation 804, the external electronic device 103 may transmit, to the electronic device 101, through the first communication link 111, the signal described with reference to operation 402 of FIG. 4, based on the identification in operation 803. As a non-limiting example, the signal may include information indicating that the other external electronic device 104 is being not worn. The electronic device 101 may receive, from the external electronic device 103, through the first communication link 111, the signal, while performing the first periodic transmission.

In operation 805, the electronic device 101 may cease (or terminate) the first periodic transmission based on the signal received from the external electronic device 103, and perform the second periodic transmission according to the second transmission cycle. For example, since reducing a quality of audio streaming from the electronic device 101 to the external electronic device 103 may be unnoticeable (or transparent) to a user wearing the external electronic device 103 from among the external electronic device 103 and the other external electronic device 104, the electronic device 101 may perform operation 805. For example, the quality of the audio streaming from electronic device 101 to the external electronic device 103 is reduced according to operation 805, but power consumed by the audio streaming from the electronic device 101 to the external electronic device 103 may be reduced according to operation 805.

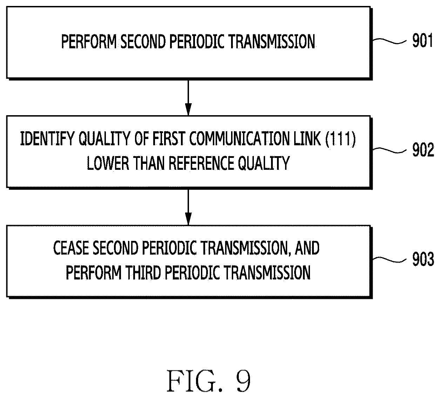

For example, a quality of the first communication link 111 may be reduced while performing the second periodic transmission. For example, based on the reduced quality of the first communication link 111, the electronic device 101 may cease the second periodic transmission and perform a third periodic transmission to the external electronic device 103. Ceasing the second periodic transmission and performing the third periodic transmission will be described in more detail with reference to FIG. 9.

FIG. 9 is a flowchart illustrating a method of ceasing a second periodic transmission and performing a third periodic transmission.

Referring to FIG. 9, in operation 901, the electronic device 101 may perform the second periodic transmission. As a non-limiting example, the second periodic transmission may be performed based on the signal received in operation 402. The electronic device 101 may identify a quality of a first communication link 111 while performing the second periodic transmission.

In operation 902, the electronic device 101 may identify the quality of the first communication link 111 lower than a reference quality. The reference quality may be a parameter used in the electronic device 101 to cease the second periodic transmission and perform the third periodic transmission. For example, the reference quality used while performing the second periodic transmission may be lower than a reference quality used while performing the first periodic transmission. However, it is not limited thereto.

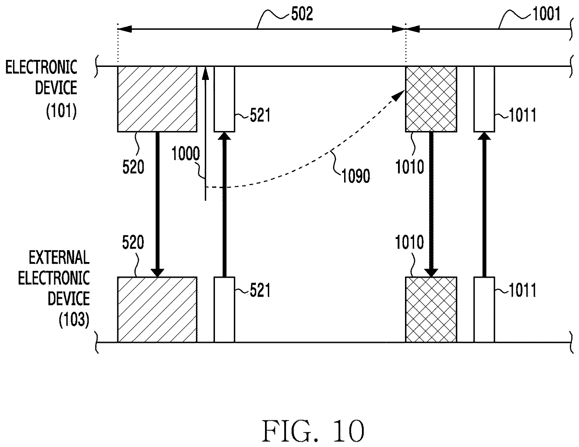

In operation 903, the electronic device 101 may cease the second periodic transmission based on the quality of the first communication link 111 lower than the reference quality, and perform the third periodic transmission to the external electronic device 103 for outputting audio via the speaker 340 of the external electronic device 103, through the first communication link 111, according to the second transmission cycle. The third periodic transmission will be described in more detail with reference to FIG. 10.

FIG. 10 illustrates an example of ceasing a second periodic transmission and performing a third periodic transmission.

Referring to FIG. 10, the electronic device 101 may perform the second periodic transmission by transmitting at least one packet 520 to the external electronic device 103 through the first communication link 111 within the time interval 502 corresponding to the second transmission cycle described above. The external electronic device 103 may receive at least one packet 520. For example, the electronic device 101 may identify a quality of the first communication link 111 after transmitting the at least one packet 520. For example, at a time point 1000 (or timing 1000) (or time 1000) after transmitting the at least one packet 520, the electronic device 101 may identify the quality of the first communication link 111 lower than the reference quality.

For example, the external electronic device 103 may transmit, to the electronic device 101, through the first communication link 111, an acknowledge signal 521, based on successfully receiving the at least one packet 520. The electronic device 101 may receive the acknowledge signal 521 from the external electronic device 103.

For example, the electronic device 101 may cease the second periodic transmission and perform the third periodic transmission, based on identifying the quality of the first communication link 111 lower than the reference quality at the point 1000, as indicated by arrows 1090. For example, the electronic device 101 may transmit, to the external electronic device 103, through the first communication link 111, at least one packet 1010, within a time interval 1001 corresponding to the second transmission cycle. As a non-limiting example, the number of at least one packet (e.g., the at least one packet 1010) transmitted within each (e.g., the time interval 1001) of the second time intervals corresponding to the second transmission cycle while performing the third periodic transmission may be identical to the number of at least one packet (e.g., the at least one packet 520) transmitted within each of the second time intervals (e.g., the time interval 502) corresponding to the second transmission cycle while performing the second periodic transmission. As a non-limiting example, a type (e.g., 2-DH3 packet) of at least one packet (e.g., the at least one packet 1010) transmitted within each (e.g., the time interval 1001) of the second time intervals while performing the third periodic transmission may be different from a type (e.g., 2-DH5 packet) of at least one packet (e.g., the at least one packet 520) transmitted within each (e.g., the time interval 502) of the second time intervals while performing the second periodic transmission. For example, a size of audio data in each of the at least one packet (e.g., the at least one packet 1010) transmitted within each (e.g., the time interval 1001) of the second time intervals while performing the third periodic transmission may be smaller than a size of audio data in each of the at least one packet (e.g., the at least one packet 520) transmitted within each (e.g., the time interval 502) of the second time intervals while performing the second periodic transmission. As a non-limiting example, the electronic device 101 may transmit, to the external electronic device 103, through the first communication link 111, the at least one packet 1010, within the time interval 1001, at a transmission rate of about 152 (kbps).

For example, the external electronic device 103 may transmit, to the electronic device 101, through the first communication link 111, an acknowledge packet 1011, within the time interval 1001, based on successfully receiving the at least one packet 1010. The electronic device 101 may receive the acknowledge packet 1011 from the external electronic device 103.

As described above, the electronic device 101 may provide, to the external electronic device 103, audio streaming robust to a reduction in a quality of the first communication link 111 by changing a periodic transmission to the external electronic device 103 based on the quality of the first communication link 111.

Changing the second periodic transmission to the third periodic transmission is merely exemplary. For example, the electronic device 101 may change the first periodic transmission to the third periodic transmission based on the signal received in operation 704 of FIG. 7. For example, on a condition that the second communication link 112 is established and audio streaming from the other electronic device 102 to the external electronic device 103 is audio streaming requiring relatively high (or higher) responsiveness, the electronic device 101 may directly switch the first periodic transmission to the third periodic transmission.

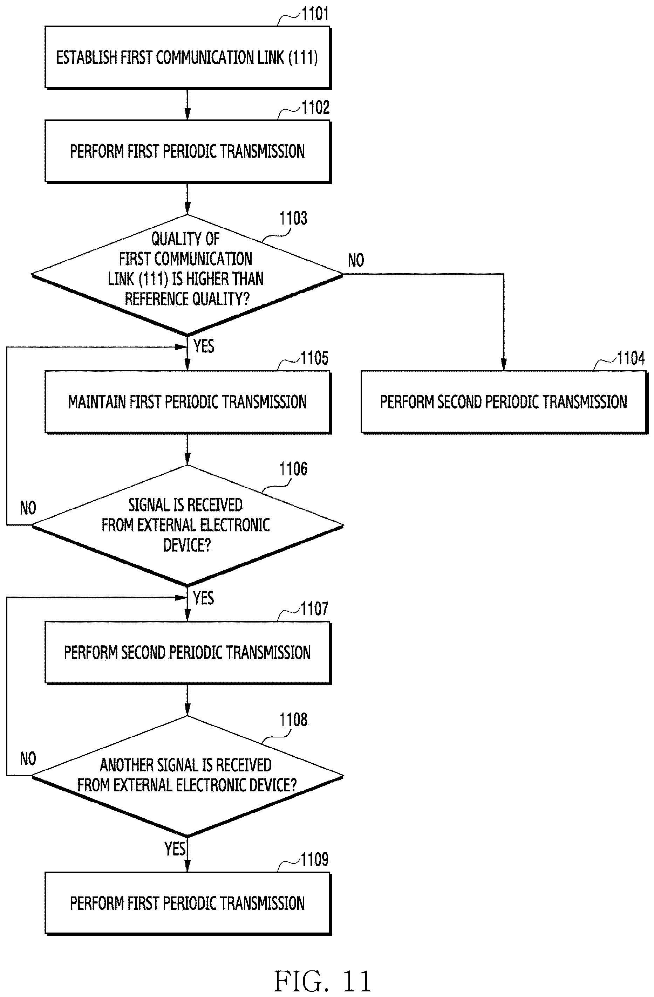

FIG. 11 is a flowchart illustrating a method performed in an electronic device to output audio through a speaker of an external electronic device.

Referring to FIG. 11, in operation 1101, the electronic device 101 and the external electronic device 103 may establish a first communication link 111. For example, the first communication link 111 may be established through operations described with reference to FIG. 1.

In operation 1102, the electronic device 101 may perform the first periodic transmission as in operation 401 of FIG. 4. For example, the electronic device 101 may transmit, to the external electronic device 103, through the first communication link 111, at least one packet, within each of the first time intervals described with reference to FIGS. 4 and 5, according to the first transmission cycle. For example, the electronic device 101 may identify a quality of the first communication link 111 while performing the first periodic transmission. For example, the electronic device 101 may identify the quality of the first communication link 111 according to a ratio of errors in HEC of packets related to the first periodic transmission, a ratio of errors in CRC of the packets, RSSI of the packets, and/or a retransmission rate of the packets.

In operation 1103, the electronic device 101 may determine whether the quality of the first communication link 111 is higher than a reference quality. For example, the electronic device 101 may compare the quality of the first communication link 111 with the reference quality. The electronic device 101 may perform operation 1105 based on the quality of the first communication link 111 higher than the reference quality, and may perform operation 1104 based on the quality of the first communication link 111 lower than the reference quality (or the quality of the first communication link 111 lower than or equal to the reference quality).

In operation 1104, on a condition that the quality of the first communication link 111 is lower than the reference quality, the electronic device 101 may perform the second periodic transmission according to the second transmission cycle. For example, the first periodic transmission may be ceased, terminated, or refrained from on a condition that the quality of the first communication link 111 is lower than the reference quality.

In operation 1105, the electronic device 101 may maintain the first periodic transmission on a condition that the quality of the first communication link 111 is higher than the reference quality. For example, since the quality of the first communication link 111 higher than the reference quality indicates that it is available to perform audio streaming to the external electronic device 103 through the first periodic transmission, the first periodic transmission may be maintained, as in operation 1105.

In operation 1106, the electronic device 101 may identify whether a signal (e.g., the signal described in operation 402 of FIG. 4) is received from the external electronic device 103 while performing the first periodic transmission. For example, the electronic device 101 may maintain performing operation 1105 and operation 1106 until the signal is received.

In operation 1107, the electronic device 101 may perform the second periodic transmission based on the signal received from the external electronic device 103 while performing the first periodic transmission. For example, the first periodic transmission may be ceased, terminated, or refrained from based on the signal received from the external electronic device 103.

In operation 1108, the electronic device 101 may identify whether another signal is received from the external electronic device 103 while performing the second periodic transmission. The other signal may be a signal transmitted based on identifying, within the external electronic device 103, that the state of the external electronic device 103, which triggers the external electronic device 103 to transmit the signal to the electronic device 101, is released in operation 1106. For example, the other signal may be transmitted from the external electronic device 103 to the electronic device 101 on the condition that the second communication link 112 is released. For example, the other signal may be transmitted from the external electronic device 103 to the electronic device 101 on a condition that the other external electronic device 104 is identified as being worn. However, it is not limited thereto. For example, the electronic device 101 may maintain operation 1107 and operation 1108 until the other signal is received from the external electronic device 103.

In operation 1109, the electronic device 101 may perform the first periodic transmission based on the other signal received from the external electronic device 103 while performing the second periodic transmission. For example, the second periodic transmission may be ceased, terminated, or refrained from based on the other signals received from the external electronic device 103.

Although not illustrated in FIG. 11, while the second periodic transmission is performed in operation 1107, a quality of the first communication link 111 may be changed from a first quality lower than a reference quality to a second quality higher than the reference quality. For example, the electronic device 101 may maintain the second periodic transmission independently of the change from the first quality to the second quality, which is identified during the second periodic transmission. For example, the second periodic transmission performed based on the signal may be maintained independently of the increasing quality of the first communication link 111. As a non-limiting example, in order to provide the external electronic device 103 with audio streaming robust with respect to the second communication link 112 additionally established after the first periodic transmission, the electronic device 101 may maintain the second periodic transmission independently of the increasing quality of the first communication link 111.

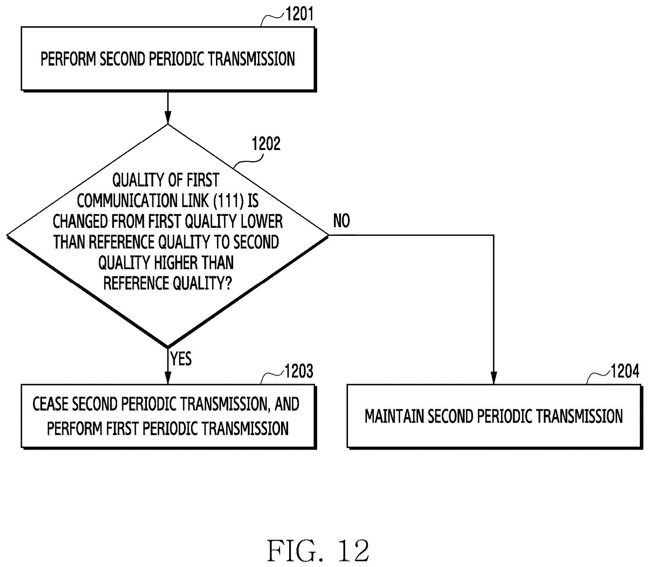

The second periodic transmission may be performed as in operation 1104 before receiving the signal from the external electronic device 103. For example, while the second periodic transmission is performed in operation 1104, the quality of the first communication link 111 may be changed from a first quality lower than a reference quality to a second quality higher than the reference quality. Operations of the electronic device 101 according to the change from the first quality to the second quality, caused during operation 1104, will be described in more detail with reference to FIG. 12.

FIG. 12 is a flowchart illustrating a method of ceasing a second periodic transmission and performing a first periodic transmission according to change in a quality of a communication link changed during a second periodic transmission performed before receiving a signal.

Referring to FIG. 12, in operation 1201, the electronic device 101 may perform the second periodic transmission as in operation 1104 of FIG. 11. For example, the second periodic transmission may be performed before receiving the signal described with reference to operation 402 of FIG. 4 from the external electronic device 103.

In operation 1202, the electronic device 101 may identify whether a quality of the first communication link 111 is changed from a first quality lower than a reference quality to a second quality higher than the reference quality while performing the second periodic transmission as in operation 1201. As a non-limiting example, the reference quality may be identical to the reference quality described with reference to operation 1103 of FIG. 11.

The electronic device 101 may perform operation 1203 based on the quality of the first communication link 111 higher than the reference quality, and perform operation 1204 based on the quality of the first communication link 111 lower than the reference quality (or the quality of the first communication link 111 lower than or equal to the reference quality).

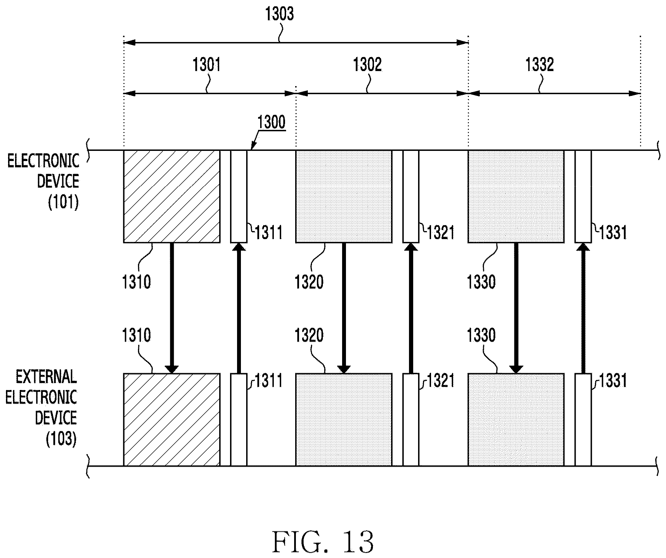

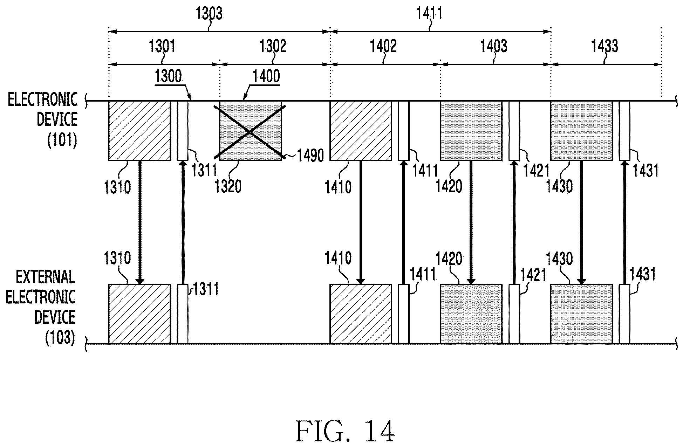

In operation 1203, the electronic device 101 may cease the second periodic transmission and perform the first periodic transmission on a condition that the quality of the first communication link 111 is higher than the reference quality. For example, the first periodic transmission may be performed according to the first transmission cycle. For example, a timing (or time point) (or time) of ceasing the second periodic transmission and performing the first periodic transmission may be defined in various ways. The time is described in more detail with reference to FIGS. 13 and 14.

FIGS. 13 and 14 illustrate an example of timing for ceasing a second periodic transmission and performing a first periodic transmission.

Referring to FIG. 13, the electronic device 101 may perform the second periodic transmission within a time interval 1303 corresponding to the second transmission cycle. For example, the electronic device 101 may transmit, to the external electronic device 103, through the first communication link 111, at least one packet 1310, within the time interval 1303. The external electronic device 103 may receive the at least one packet 1310 from the electronic device 101. The external electronic device 103 may transmit, to the electronic device 101, through the first communication link 111, an acknowledge signal 1311, within the time interval 1303, based on successfully receiving the at least one packet 1310. The electronic device 101 may receive, from the external electronic device 103, through the first communication link 111, the acknowledge signal 1311, within the time interval 1303.

At a timing 1300, the electronic device 101 may identify that the quality of the first communication link 111 is higher than the reference quality. For example, a length of a time interval from a start timing of a transmission of the at least one packet 1310 to the timing 1300 may be shorter than a length of a time interval 1301. For example, at the timing 1300 at which the identification is performed, the electronic device 101 may identify that the first periodic transmission may be performed before the time interval 1303 allocated for the second periodic transmission is terminated. For example, the electronic device 101 may perform the first periodic transmission within a time interval 1302 corresponding to the first transmission cycle, in response to the identification. For example, the electronic device 101 may determine that the time interval 1302, which is before termination of the time interval 1303, may be allocated for the first periodic transmission, in response to the identification at the timing 1300, and perform the first periodic transmission within the time interval 1302 according to the determination. For example, the electronic device 101 may transmit, to the external electronic device 103, through the first communication link 111, at least one packet 1320, within a time interval 1302, which is (newly) scheduled in response to the identification. For example, the electronic device 101 may schedule transmitting at least one packet according to the second periodic transmission, within a time interval corresponding to the second transmission cycle following the time interval 1303, before the identification at the timing 1300. For example, the electronic device 101 may cancel the scheduled transmission of at least one packet in response to the identification at the timing 1300, and schedule transmitting at least one packet 1320 within the time interval 1302 corresponding to the first transmission cycle. For example, when a length of the time interval 1303 is up to 6 ms, up to 12 ms, up to 18 ms, up to 24 ms or up to 30 ms and a length of the time interval 1302 is up to 3 ms, 6 up to ms, up to 9 ms, up to 12 ms or up to 15 ms, the time interval 1302 may start at a timing following the time interval 1301 corresponding to the first transmission cycle from a start timing of the time interval 1303.

As a non-limiting example, the number of at least one audio frame included in each of the at least one packet 1320 transmitted according to the first periodic transmission may be less than the number of audio frames included in each of the at least one packet 1310 transmitted according to the second periodic transmission. For example, a size of each of the at least one packet 1320 transmitted according to the first periodic transmission above may be (substantially) identical to a size of each of the at least one packet 1310 transmitted according to the second periodic transmission. The external electronic device 103 may receive the at least one packet 1320 from the electronic device 101. The external electronic device 103 may transmit, to the electronic device 101, through the first communication link 111, an acknowledge signal 1321, within the time interval 1302, based on successfully receiving the at least one packet 1320. The electronic device 101 may receive, from the external electronic device 103, through the first communication link 111, the acknowledge signal 1321, within the time interval 1302.

The electronic device 101 may transmit at least one packet 1330, within a time interval 1332 (corresponding to the first transmission cycle) following the time interval 1302, according to the first periodic transmission. The external electronic device 103 may receive the at least one packet 1330 from the electronic device 101. The external electronic device 103 may transmit, to the electronic device 101, through the first communication link 111, an acknowledge signal 1331, within the time interval 1332, based on successfully receiving the at least one packet 1330. The electronic device 101 may receive, from the external electronic device 103, through the first communication link 111, the acknowledge signal 1331, within the time interval 1332.

Unlike FIG. 13, the electronic device 101 may maintain the transmission of the at least one packet scheduled before the identification at the timing 1300. For example, based on identifying the quality of the first communication link 111 higher than the reference quality at another timing (e.g., a timing 1400 to be described with reference to FIG. 14) following the timing 1300, the electronic device 101 may maintain the transmission of the at least one packet scheduled before the other timing.

Referring to FIG. 14, the electronic device 101 may perform the second periodic transmission within the time interval 1303 corresponding to the second transmission cycle. For example, the electronic device 101 may transmit, to the external electronic device 103, through the first communication link 111, at least one packet 1310, within the time interval 1303. The external electronic device 103 may receive, from the electronic device 101, the at least one packet 1310. The external electronic device 103 may transmit, to the electronic device 101, through the first communication link 111, an acknowledge signal 1311, within the time interval 1303, based on successfully receiving the at least one packet 1310. The electronic device 101 may receive, from the external electronic device 103, through the first communication link 111, the acknowledge signal 1311, within the time interval 1303.

At the timing 1300, the electronic device 101 may identify that the quality of the first communication link 111 is higher than the reference quality. Based on the identification, the electronic device 101 may refrain from transmitting at least one packet 1320, to the external electronic device 103, through the first communication link 111, within the time interval 1302, as in a state 1490. For example, since canceling the transmission of the at least one packet (e.g., at least one packet 1410) scheduled before the identification at the timing 1300 and transmitting at least one packet 1320 within the time interval 1302 causes a rapid change in a transmission rate to the external electronic device 103, the electronic device 101 may maintain the transmission of the at least one packet (e.g., at least one packet 1410) scheduled before the identification at the timing 1300 independently of the identification.

For example, the electronic device 101 may transmit, to the external electronic device 103, through the first communication link 111, at least one packet 1410, at a timing (e.g., a start timing of a time interval 1402) following a time interval corresponding to the second transmission cycle from a transmission timing of the at least one packet 1310. For example, unlike the at least one packet 1320, the at least one packet 1410 may be a packet, which is generated according to the second periodic transmission (or stored in memory 220 of the electronic device 101 according to the second periodic transmission). The external electronic device 103 may receive the at least one packet 1410 from the electronic device 101. The external electronic device 103 may transmit, to the electronic device 101, through the first communication link 111, an acknowledge signal 1411, within a time interval 1402, based on successfully receiving the at least one packet 1410. The electronic device 101 may receive, from the external electronic device 103, through the first communication link 111, the acknowledge signal 1411, within the time interval 1402.

For example, the electronic device 101 may transmit, to the external electronic device 103, through the first communication link 111, at least one packet 1420, within a time interval 1403 corresponding to the first transmission cycle, based on the transmission of the at least one packet 1410 and the identification at the timing 1300. For example, unlike the at least one packet 1310 and the at least one packet 1410, the at least one packet 1420 may be a packet, which is generated according to the first periodic transmission (or stored in the memory 220 according to the first periodic transmission). As a non-limiting example, the number of at least one audio frame included in each of the at least one packet 1420 transmitted according to the first periodic transmission may be less than the number of audio frames included in each of the at least one packet 1410 (or the at least one packet 1310) transmitted according to the second periodic transmission. The external electronic device 103 may receive the at least one packet 1420 from the electronic device 101. The external electronic device 103 may transmit, to the electronic device 101, through the first communication link 111, an acknowledge signal 1421, within the time interval 1403, based on successfully receiving the at least one packet 1420. The electronic device 101 may receive, from the external electronic device 103, through the first communication link 111, the acknowledge signal 1421, within the time interval 1403.

The electronic device 101 may transmit at least one packet 1430 within a time interval 1433 (corresponding to the first transmission cycle) following the time interval 1403, according to the first periodic transmission. The external electronic device 103 may receive the at least one packet 1430 from the electronic device 101. The external electronic device 103 may transmit, to the electronic device 101, through the first communication link 111, an acknowledge signal 1431, within the time interval 1433, based on successfully receiving the at least one packet 1430. The electronic device 101 may receive, from the external electronic device 103, through the first communication link 111, the acknowledge signal 1431, within the time interval 1433.

At a timing 1400, the electronic device 101 may identify that the quality of the first communication link 111 is higher than the reference quality. For example, a length of a time interval from a start timing of transmission of the at least one packet 1310 to the timing 1400 may be longer than a length of the time interval 1301. For example, at the timing 1400 at which the identification is performed, the electronic device 101 may identify that the first periodic transmission is unable to be performed before termination of the time interval 1303 allocated for the second periodic transmission. For example, according to the identification, the electronic device 101 may maintain the transmission of the at least one packet (e.g., the at least one packet 1410) scheduled before the identification at the timing 1400.

For example, the electronic device 101 may transmit, to the external electronic device 103, through the first communication link 111, at least one packet 1410, at a timing (e.g., a start timing of the time interval 1402) after a time interval corresponding to the second transmission cycle from a start timing of transmission of the at least one packet 1310. For example, unlike the at least one packet 1320, the at least one packet 1410 may be a packet, which is generated according to the second periodic transmission (or stored in the memory 220 of the electronic device 101 according to the second periodic transmission). The external electronic device 103 may receive the at least one packet 1410 from the electronic device 101. The external electronic device 103 may transmit, to the electronic device 101, through the first communication link 111, an acknowledge signal 1411, within the time interval 1402, based on successfully receiving the at least one packet 1410. The electronic device 101 may receive, from the external electronic device 103, through the first communication link 111, the acknowledge signal 1411, within the time interval 1402.

For example, the electronic device 101 may transmit, to the external electronic device 103, through the first communication link 111, at least one packet 1420, within a time interval 1403 corresponding to the first transmission cycle, based on the transmission of the at least one packet 1410 and the identification at the timing 1400. For example, unlike the at least one packet 1310 and the at least one packet 1410, the at least one packet 1420 may be a packet, which is generated according to the first periodic transmission (or stored in the memory 220 according to the first periodic transmission). As a non-limiting example, the number of at least one audio frame included in each of the at least one packet 1420 transmitted according to the first periodic transmission may be less than the number of audio frames included in each of the at least one packet 1410 (or the at least one packet 1310) transmitted according to the second periodic transmission. For example, a size of each of the at least one packet 1420 transmitted according to the first periodic transmission may be (substantially) identical to a size of each of the at least one packet 1410 transmitted according to the second periodic transmission. The external electronic device 103 may receive the at least one packet 1420 from the electronic device 101. The external electronic device 103 may transmit, to the electronic device 101, through the first communication link 111, an acknowledge signal 1421, within the time interval 1403, based on successfully receiving the at least one packet 1420. The electronic device 101 may receive, from the external electronic device 103, through the first communication link 111, the acknowledge signal 1421, within the time interval 1403.

The electronic device 101 may transmit at least one packet 1430 within a time interval 1433 (corresponding to the first transmission cycle) following the time interval 1403, according to the first periodic transmission. The external electronic device 103 may receive the at least one packet 1430 from the electronic device 101. The external electronic device 103 may transmit, to the electronic device 101, through the first communication link 111, an acknowledge signal 1431, within the time interval 1433, based on successfully receiving the at least one packet 1430. The electronic device 101 may receive, from the external electronic device 103, through the first communication link 111, the acknowledge signal 1431, within the time interval 1433.

Referring back to FIG. 12, in operation 1204, the electronic device 101 may maintain the second periodic transmission on a condition that the quality of the first communication link 111 is lower than the reference quality.

As described above, the electronic device 101 may adaptively change a timing of performing the first periodic transmission (or a timing of ceasing the second periodic transmission) based on the quality of the first communication link 111 changed while performing the second periodic transmission.

The above descriptions may be executed by the electronic device 1501 of FIG. 15.

FIG. 15 is a block diagram illustrating an electronic device 1501 in a network environment 1500 according to various embodiments. Referring to FIG. 15, the electronic device 1501 in the network environment 1500 may communicate with an electronic device 1502 via a first network 1598 (e.g., a short-range wireless communication network), or at least one of an electronic device 1504 or a server 1508 via a second network 1599 (e.g., a long-range wireless communication network). According to an embodiment, the electronic device 1501 may communicate with the electronic device 1504 via the server 1508. According to an embodiment, the electronic device 1501 may include a processor 1520, memory 1530, an input module 1550, a sound output module 1555, a display module 1560, an audio module 1570, a sensor module 1576, an interface 1577, a connecting terminal 1578, a haptic module 1579, a camera module 1580, a power management module 1588, a battery 1589, a communication module 1590, a subscriber identification module(SIM) 1596, or an antenna module 1597. In some embodiments, at least one of the components (e.g., the connecting terminal 1578) may be omitted from the electronic device 1501, or one or more other components may be added in the electronic device 1501. In some embodiments, some of the components (e.g., the sensor module 1576, the camera module 1580, or the antenna module 1597) may be implemented as a single component (e.g., the display module 1560).

The processor 1520 may execute, for example, software (e.g., a program 1540) to control at least one other component (e.g., a hardware or software component) of the electronic device 1501 coupled with the processor 1520, and may perform various data processing or computation. According to an embodiment, as at least part of the data processing or computation, the processor 1520 may store a command or data received from another component (e.g., the sensor module 1576 or the communication module 1590) in volatile memory 1532, process the command or the data stored in the volatile memory 1532, and store resulting data in non-volatile memory 1534. According to an embodiment, the processor 1520 may include a main processor 1521 (e.g., a central processing unit (CPU) or an application processor (AP)), or an auxiliary processor 1523 (e.g., a graphics processing unit (GPU), a neural processing unit (NPU), an image signal processor (ISP), a sensor hub processor, or a communication processor (CP)) that is operable independently from, or in conjunction with, the main processor 1521. For example, when the electronic device 1501 includes the main processor 1521 and the auxiliary processor 1523, the auxiliary processor 1523 may be adapted to consume less power than the main processor 1521, or to be specific to a specified function. The auxiliary processor 1523 may be implemented as separate from, or as part of the main processor 1521.

The auxiliary processor 1523 may control at least some of functions or states related to at least one component (e.g., the display module 1560, the sensor module 1576, or the communication module 1590) among the components of the electronic device 1501, instead of the main processor 1521 while the main processor 1521 is in an inactive (e.g., sleep) state, or together with the main processor 1521 while the main processor 1521 is in an active state (e.g., executing an application). According to an embodiment, the auxiliary processor 1523 (e.g., an image signal processor or a communication processor) may be implemented as part of another component (e.g., the camera module 1580 or the communication module 1590) functionally related to the auxiliary processor 1523. According to an embodiment, the auxiliary processor 1523 (e.g., the neural processing unit) may include a hardware structure specified for artificial intelligence model processing. An artificial intelligence model may be generated by machine learning. Such learning may be performed, e.g., by the electronic device 1501 where the artificial intelligence is performed or via a separate server (e.g., the server 1508). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1530 may store various data used by at least one component (e.g., the processor 1520 or the sensor module 1576) of the electronic device 1501. The various data may include, for example, software (e.g., the program 1540) and input data or output data for a command related thereto. The memory 1530 may include the volatile memory 1532 or the non-volatile memory 1534.

The program 1540 may be stored in the memory 1530 as software, and may include, for example, an operating system (OS) 1542, middleware 1544, or an application 1546.

The input module 1550 may receive a command or data to be used by another component (e.g., the processor 1520) of the electronic device 1501, from the outside (e.g., a user) of the electronic device 1501. The input module 1550 may include, for example, a microphone, a mouse, a keyboard, a key (e.g., a button), or a digital pen (e.g., a stylus pen).

The sound output module 1555 may output sound signals to the outside of the electronic device 1501. The sound output module 1555 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1560 may visually provide information to the outside (e.g., a user) of the electronic device 1501. The display module 1560 may include, for example, a display, a hologram device, or a projector and control circuitry to control a corresponding one of the display, hologram device, and projector. According to an embodiment, the display module 1560 may include a touch sensor adapted to detect a touch, or a pressure sensor adapted to measure the intensity of force incurred by the touch.

The audio module 1570 may convert a sound into an electrical signal and vice versa. According to an embodiment, the audio module 1570 may obtain the sound via the input module 1550, or output the sound via the sound output module 1555 or a headphone of an external electronic device (e.g., an electronic device 1502) directly (e.g., wiredly) or wirelessly coupled with the electronic device 1501.

The sensor module 1576 may detect an operational state (e.g., power or temperature) of the electronic device 1501 or an environmental state (e.g., a state of a user) external to the electronic device 1501, and then generate an electrical signal or data value corresponding to the detected state. According to an embodiment, the sensor module 1576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1577 may support one or more specified protocols to be used for the electronic device 1501 to be coupled with the external electronic device (e.g., the electronic device 1502) directly (e.g., wiredly) or wirelessly. According to an embodiment, the interface 1577 may include, for example, a high definition multimedia interface (HDMI), a universal serial bus (USB) interface, a secure digital (SD) card interface, or an audio interface.

A connecting terminal 1578 may include a connector via which the electronic device 1501 may be physically connected with the external electronic device (e.g., the electronic device 1502). According to an embodiment, the connecting terminal 1578 may include, for example, an HDMI connector, a USB connector, a SD card connector, or an audio connector (e.g., a headphone connector).

The haptic module 1579 may convert an electrical signal into a mechanical stimulus (e.g., a vibration or a movement) or electrical stimulus which may be recognized by a user via his tactile sensation or kinesthetic sensation. According to an embodiment, the haptic module 1579 may include, for example, a motor, a piezoelectric element, or an electric stimulator.

The camera module 1580 may capture a still image or moving images. According to an embodiment, the camera module 1580 may include one or more lenses, image sensors, image signal processors, or flashes.

The power management module 1588 may manage power supplied to the electronic device 1501. According to an embodiment, the power management module 1588 may be implemented as at least part of, for example, a power management integrated circuit (PMIC).

The battery 1589 may supply power to at least one component of the electronic device 1501. According to an embodiment, the battery 1589 may include, for example, a primary cell which is not rechargeable, a secondary cell which is rechargeable, or a fuel cell.

The communication module 1590 may support establishing a direct (e.g., wired) communication channel or a wireless communication channel between the electronic device 1501 and the external electronic device (e.g., the electronic device 1502, the electronic device 1504, or the server 1508) and performing communication via the established communication channel. The communication module 1590 may include one or more communication processors that are operable independently from the processor 1520 (e.g., the application processor (AP)) and supports a direct (e.g., wired) communication or a wireless communication. According to an embodiment, the communication module 1590 may include a wireless communication module 1592 (e.g., a cellular communication module, a short-range wireless communication module, or a global navigation satellite system (GNSS) communication module) or a wired communication module 1594 (e.g., a local area network (LAN) communication module or a power line communication (PLC) module). A corresponding one of these communication modules may communicate with the external electronic device via the first network 1598 (e.g., a short-range communication network, such as Bluetooth^{™}, wireless-fidelity (Wi-Fi) direct, or infrared data association (IrDA)) or the second network 1599 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1592 may identify and authenticate the electronic device 1501 in a communication network, such as the first network 1598 or the second network 1599, using subscriber information (e.g., international mobile subscriber identity (IMSI)) stored in the subscriber identification module 1596.

The wireless communication module 1592 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1592 may support a high-frequency band (e.g., the mmWave band) to achieve, e.g., a high data transmission rate. The wireless communication module 1592 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1592 may support various requirements specified in the electronic device 1501, an external electronic device (e.g., the electronic device 1504), or a network system (e.g., the second network 1599). According to an embodiment, the wireless communication module 1592 may support a peak data rate (e.g., 20Gbps or more) for implementing eMBB, loss coverage (e.g., 1564dB or less) for implementing mMTC, or U-plane latency (e.g., 0.5ms or less for each of downlink (DL) and uplink (UL), or a round trip of 15ms or less) for implementing URLLC.

The antenna module 1597 may transmit or receive a signal or power to or from the outside (e.g., the external electronic device) of the electronic device 1501. According to an embodiment, the antenna module 1597 may include an antenna including a radiating element composed of a conductive material or a conductive pattern formed in or on a substrate (e.g., a printed circuit board (PCB)). According to an embodiment, the antenna module 1597 may include a plurality of antennas (e.g., array antennas). In such a case, at least one antenna appropriate for a communication scheme used in the communication network, such as the first network 1598 or the second network 1599, may be selected, for example, by the communication module 1590 (e.g., the wireless communication module 1592) from the plurality of antennas. The signal or the power may then be transmitted or received between the communication module 1590 and the external electronic device via the selected at least one antenna. According to an embodiment, another component (e.g., a radio frequency integrated circuit (RFIC)) other than the radiating element may be additionally formed as part of the antenna module 1597.

According to various embodiments, the antenna module 1597 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1501 and the external electronic device 1504 via the server 1508 coupled with the second network 1599. Each of the electronic devices 1502 or 1504 may be a device of a same type as, or a different type, from the electronic device 1501. According to an embodiment, all or some of operations to be executed at the electronic device 1501 may be executed at one or more of the external electronic devices 1502, 1504, or 1508. For example, if the electronic device 1501 should perform a function or a service automatically, or in response to a request from a user or another device, the electronic device 1501, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1501. The electronic device 1501 may provide the outcome, with or without further processing of the outcome, as at least part of a reply to the request. To that end, a cloud computing, distributed computing, mobile edge computing (MEC), or client-server computing technology may be used, for example. The electronic device 1501 may provide ultra low-latency services using, e.g., distributed computing or mobile edge computing. In another embodiment, the external electronic device 1504 may include an internet-of-things (IoT) device. The server 1508 may be an intelligent server using machine learning and/or a neural network. According to an embodiment, the external electronic device 1504 or the server 1508 may be included in the second network 1599. The electronic device 1501 may be applied to intelligent services (e.g., smart home, smart city, smart car, or healthcare) based on 5G communication technology or IoT-related technology.

As described above, an electronic device (e.g., the electronic device 101) may comprise communication circuitry (e.g., the communication circuitry 230) for Bluetooth, at least one processor (e.g., the at least one processor 210) comprising processing circuitry, and memory (e.g., the memory 220), storing instructions. The memory may comprise one or more storage media. The instructions, when executed by the at least one processor individually or collectively, may cause the electronic device to perform, using the communication circuitry, through a first communication link between the electronic device and an external electronic device, a first periodic transmission to the external electronic device, according to a first transmission cycle, the first periodic transmission for outputting audio via a speaker of the external electronic device, receive, using the communication circuitry, through the first communication link, from the external electronic device, a signal indicating that the external electronic device is operating in a multi-point state in which a second communication link is established between the external electronic device and another electronic device while the first communication link is established between the electronic device and the external electronic device, and perform, based on the signal, using the communication circuitry, through the first communication link, a second periodic transmission to the external electronic device, according to a second transmission cycle longer than the first transmission cycle, the second periodic transmission for outputting audio via the speaker of the external electronic device.

For example, a number of audio frame included in each of packets transmitted to the external electronic device while performing the first periodic transmission may be less than a number of audio frame included in each of packets transmitted to the external electronic device while performing the second periodic transmission.

For example, a number of at least one packet transmitted to the external electronic device in each of first time intervals corresponding to the first transmission cycle while performing the first periodic transmission may be identical to a number of at least one packet transmitted to the external electronic device in each of second time intervals corresponding to the second transmission cycle while performing the second periodic transmission. For example, a type of each of the at least one packet transmitted to the external electronic device in each of the first time intervals while performing the first periodic transmission may be identical to a type of each of the at least one packet transmitted to the external electronic device in each of the second time intervals while performing the second periodic transmission. For example, a number of at least one audio frame included in each of the at least one packet transmitted to the external electronic device in each of the first time intervals while performing the first periodic transmission may be less than a number of at least one audio frame included in each of the at least one packet transmitted to the external electronic device in each of the second time intervals while performing the second periodic transmission.

For example, a number of at least one packet transmitted to the external electronic device in each of first time intervals corresponding to the first transmission cycle while performing the first periodic transmission may be identical to a number of at least one packet transmitted to the external electronic device in each of second time intervals corresponding to the second transmission cycle while performing the second periodic transmission. For example, a size of each of the at least one packet transmitted to the external electronic device in each of the first time intervals while performing the first periodic transmission may be larger than a size of each of the at least one packet transmitted to the external electronic device in each of the second time intervals while performing the second periodic transmission.

For example, a number of at least one packet transmitted to the external electronic device in each of first time intervals corresponding to the first transmission cycle while performing the first periodic transmission may be less than a number of at least one packet transmitted to the external electronic device in each of second time intervals corresponding to the second transmission cycle while performing the second periodic transmission. For example, a size of each of the at least one packet transmitted to the external electronic device in each of the first time intervals while performing the first periodic transmission may be larger than a size of each of the at least one packet transmitted to the external electronic device in each of the second time intervals while performing the second periodic transmission.

For example, the first communication link may be a communication link for a first communication scheme. For example, the instructions, when executed by the at least one processor individually or collectively, may cause the electronic device to, before receiving the signal, establish, using the communication circuitry, a third communication link between the electronic device and the external electronic device for a second communication scheme different from the first communication scheme, and based on the signal, lengthen, using the communication circuitry, a connection interval of the third communication link.

For example, the instructions, when executed by the at least one processor individually or collectively, may cause the electronic device to, while performing the second periodic transmission, identify a quality of the first communication link, and based on the quality lower than a reference quality, cease the second periodic transmission, and perform, using the communication circuitry, through the first communication link, a third periodic transmission to the external electronic device, according to the second transmission cycle, the third periodic transmission for outputting the audio via the speaker of the external electronic device. For example, a number of at least one packet transmitted to the external electronic device in each of first time intervals corresponding to the first transmission cycle while performing the first periodic transmission may be identical to a number of at least one packet transmitted to the external electronic device in each of second time intervals corresponding to the second transmission cycle while performing the second periodic transmission. For example, a type of each of the at least one packet transmitted to the external electronic device in each of the first time intervals while performing the first periodic transmission may be identical to a type of each of the at least one packet transmitted to the external electronic device in each of the second time intervals while performing the second periodic transmission. For example, a number of at least one audio frame included in each of the at least one packet transmitted to the external electronic device in each of the first time intervals while performing the first periodic transmission may be less than a number of at least one audio frame included in each of the at least one packet transmitted to the external electronic device in each of the second time intervals while performing the second periodic transmission. For example, a number of the at least one packet transmitted to the external electronic device in each of the second time intervals while performing the second periodic transmission may be identical to a number of at least one packet transmitted to the external electronic device in each of the second time intervals while performing the third periodic transmission. For example, a type of each of the at least one packet transmitted to the external electronic device in each of the second time intervals while performing the second periodic transmission may be different from a type of each of the at least one packet transmitted to the external electronic device in each of the second time intervals while performing the third periodic transmission.

For example, the instructions, when executed by the at least one processor individually or collectively, may cause the electronic device to, while performing the second periodic transmission, identify a quality of the first communication link, and based on the quality lower than a reference quality, cease the second periodic transmission, and perform, using the communication circuitry, through the first communication link, a third periodic transmission to the external electronic device, according to the second transmission cycle, the third periodic transmission for outputting the audio via the speaker of the external electronic device. For example, a size of data transmitted to the external electronic device per unit time according to the third periodic transmission may be smaller than a size of data transmitted to the external electronic device per unit time according to the second periodic transmission.

For example, the instructions, when executed by the at least one processor individually or collectively, may cause the electronic device to, while performing the second periodic transmission, identify that a quality of the first communication link is changed from a first quality lower than a reference quality to a second quality higher than the reference quality, and maintain the second periodic transmission independently from change from the first quality to the second quality.

For example, the signal may include information indicating establishing the second communication link.

For example, the instructions, when executed by the at least one processor individually or collectively, may cause the electronic device to, based on the signal, cease the first periodic transmission.

As described above, an electronic device (e.g., the electronic device 101) may comprise communication circuitry (e.g., the communication circuitry 230) for Bluetooth, at least one processor (e.g., the at least one processor 210) comprising processing circuitry, and memory (e.g., the memory 220), storing instructions. The memory may comprise one or more storage media. For example, the instructions, when executed by the at least one processor individually or collectively, may cause the electronic device to perform, using the communication circuitry, through a communication link between the electronic device and an external electronic device, a first periodic transmission to the external electronic device, according to a first transmission cycle, the first periodic transmission for outputting audio via a speaker of the external electronic device, receive, using the communication circuitry, through the communication link, from the external electronic device, a signal indicating that another external electronic device paired with the external electronic device is being not worn while performing the first periodic transmission, and based on the signal, perform, using the communication circuitry, through the communication link, a second periodic transmission to the external electronic device, according to a second transmission cycle longer than the first transmission cycle, the second periodic transmission for outputting audio via the speaker of the external electronic device.

For example, a number of audio frame included in each of packets transmitted to the external electronic device while performing the first periodic transmission may be less than a number of audio frame included in each of packets transmitted to the external electronic device while performing the second periodic transmission.

For example, a number of at least one packet transmitted to the external electronic device in each of first time intervals corresponding to the first transmission cycle while performing the first periodic transmission may be identical to a number of at least one packet transmitted to the external electronic device in each of second time intervals corresponding to the second transmission cycle while performing the second periodic transmission. For example, a type of each of the at least one packet transmitted to the external electronic device in each of the first time intervals while performing the first periodic transmission may be identical to a type of each of the at least one packet transmitted to the external electronic device in each of the second time intervals while performing the second periodic transmission. For example, a number of at least one audio frame included in each of the at least one packet transmitted to the external electronic device in each of the first time intervals while performing the first periodic transmission may be less than a number of at least one audio frame included in each of the at least one packet transmitted to the external electronic device in each of the second time intervals while performing the second periodic transmission.

For example, a number of at least one packet transmitted to the external electronic device in each of first time intervals corresponding to the first transmission cycle while performing the first periodic transmission may be identical to a number of at least one packet transmitted to the external electronic device in each of second time intervals corresponding to the second transmission cycle while performing the second periodic transmission. For example, a size of each of the at least one packet transmitted to the external electronic device in each of the first time intervals while performing the first periodic transmission may be larger than a size of each of the at least one packet transmitted to the external electronic device in each of the second time intervals while performing the second periodic transmission.

For example, a number of at least one packet transmitted to the external electronic device in each of first time intervals corresponding to the first transmission cycle while performing the first periodic transmission may be less than a number of at least one packet transmitted to the external electronic device in each of second time intervals corresponding to the second transmission cycle while performing the second periodic transmission. For example, a size of each of the at least one packet transmitted to the external electronic device in each of the first time intervals while performing the first periodic transmission may be larger than a size of each of the at least one packet transmitted to the external electronic device in each of the second time intervals while performing the second periodic transmission.

As described above, a method may be executed in an electronic device with communication circuitry for Bluetooth. The method may comprise performing, using the communication circuitry, through a first communication link between the electronic device and an external electronic device, a first periodic transmission to the external electronic device, according to a first transmission cycle, the first periodic transmission for outputting audio via a speaker of the external electronic device, receiving, using the communication circuitry, through the first communication link, from the external electronic device, a signal indicating that the external electronic device is operating in a multi-point state in which a second communication link is established between the external electronic device and another electronic device while the first communication link is established between the electronic device and the external electronic device, and based on the signal, performing, using the communication circuitry, through the first communication link, a second periodic transmission to the external electronic device, according to a second transmission cycle longer than the first transmission cycle, the second periodic transmission for outputting audio via the speaker of the external electronic device.

For example, a number of audio frame included in each of packets transmitted to the external electronic device while performing the first periodic transmission may be less than a number of audio frame included in each of packets transmitted to the external electronic device while performing the second periodic transmission.

For example, a number of at least one packet transmitted to the external electronic device in each of first time intervals corresponding to the first transmission cycle while performing the first periodic transmission may be identical to a number of at least one packet transmitted to the external electronic device in each of second time intervals corresponding to the second transmission cycle while performing the second periodic transmission. For example, a type of each of the at least one packet transmitted to the external electronic device in each of the first time intervals while performing the first periodic transmission may be identical to a type of each of the at least one packet transmitted to the external electronic device in each of the second time intervals while performing the second periodic transmission. For example, a number of at least one audio frame included in each of the at least one packet transmitted to the external electronic device in each of the first time intervals while performing the first periodic transmission may be less than a number of at least one audio frame included in each of the at least one packet transmitted to the external electronic device in each of the second time intervals while performing the second periodic transmission.

For example, a number of at least one packet transmitted to the external electronic device in each of first time intervals corresponding to the first transmission cycle while performing the first periodic transmission may be identical to a number of at least one packet transmitted to the external electronic device in each of second time intervals corresponding to the second transmission cycle while performing the second periodic transmission. For example, a size of each of the at least one packet transmitted to the external electronic device in each of the first time intervals while performing the first periodic transmission may be larger than a size of each of the at least one packet transmitted to the external electronic device in each of the second time intervals while performing the second periodic transmission.

For example, a number of at least one packet transmitted to the external electronic device in each of first time intervals corresponding to the first transmission cycle while performing the first periodic transmission may be less than a number of at least one packet transmitted to the external electronic device in each of second time intervals corresponding to the second transmission cycle while performing the second periodic transmission. For example, a size of each of the at least one packet transmitted to the external electronic device in each of the first time intervals while performing the first periodic transmission may be larger than a size of each of the at least one packet transmitted to the external electronic device in each of the second time intervals while performing the second periodic transmission.

For example, the first communication link may be a communication link for a first communication scheme. For example, the method may comprise, before receiving the signal, establishing, using the communication circuitry, a third communication link between the electronic device and the external electronic device for a second communication scheme different from the first communication scheme, and based on the signal, lengthening, using the communication circuitry, a connection interval of the third communication link.

For example, the method may comprise, while performing the second periodic transmission, identifying a quality of the first communication link, and based on the quality lower than a reference quality, ceasing the second periodic transmission, and performing, using the communication circuitry, through the first communication link, a third periodic transmission to the external electronic device, according to the second transmission cycle, the third periodic transmission for outputting the audio via the speaker of the external electronic device. For example, a number of at least one packet transmitted to the external electronic device in each of first time intervals corresponding to the first transmission cycle while performing the first periodic transmission may be identical to a number of at least one packet transmitted to the external electronic device in each of second time intervals corresponding to the second transmission cycle while performing the second periodic transmission. For example, a type of each of the at least one packet transmitted to the external electronic device in each of the first time intervals while performing the first periodic transmission may be identical to a type of each of the at least one packet transmitted to the external electronic device in each of the second time intervals while performing the second periodic transmission. For example, a number of at least one audio frame included in each of the at least one packet transmitted to the external electronic device in each of the first time intervals while performing the first periodic transmission may be less than a number of at least one audio frame included in each of the at least one packet transmitted to the external electronic device in each of the second time intervals while performing the second periodic transmission. For example, a number of the at least one packet transmitted to the external electronic device in each of the second time intervals while performing the second periodic transmission may be identical to a number of at least one packet transmitted to the external electronic device in each of the second time intervals while performing the third periodic transmission. For example, a type of each of the at least one packet transmitted to the external electronic device in each of the second time intervals while performing the second periodic transmission may be different from a type of each of the at least one packet transmitted to the external electronic device in each of the second time intervals while performing the third periodic transmission.

For example, the method may comprise, while performing the second periodic transmission, identifying a quality of the first communication link, and based on the quality lower than a reference quality, ceasing the second periodic transmission, and performing, using the communication circuitry, through the first communication link, a third periodic transmission to the external electronic device, according to the second transmission cycle, the third periodic transmission for outputting the audio via the speaker of the external electronic device. For example, a size of data transmitted to the external electronic device per unit time according to the third periodic transmission may be smaller than a size of data transmitted to the external electronic device per unit time according to the second periodic transmission.

For example, the method may comprise, while performing the second periodic transmission, identifying that a quality of the first communication link is changed from a first quality lower than a reference quality to a second quality higher than the reference quality, and maintaining the second periodic transmission independently from change from the first quality to the second quality.

For example, the signal may include information indicating establishing the second communication link.

For example, the method may comprise, based on the signal, ceasing the first periodic transmission.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1540) including one or more instructions that are stored in a storage medium (e.g., internal memory 1536 or external memory 1538) that is readable by a machine (e.g., the electronic device 1501). For example, a processor (e.g., the processor 1520) of the machine (e.g., the electronic device 1501) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Additionally, the following is part of this disclosure:
The external electronic device may be an accessory electronic device, e.g. for audio output, like a speaker or a headphone or a pair of in-ear headphones.

Bluetooth is a standard for wireless communication. Versions of the standard the devices and methods of this disclosure apply, allow for one device, e.g. the external device, to be simultaneously connected via a first communication link to a first other device and via a second communication link to a second other device. The second link can be established while the first link already is and possibly remains established. Such a point-to-multipoint connection can also be called a mesh network, wherein some versions of the standard also support mesh networks. Mesh networks are for example specified in the Bluetooth Mesh specification. To provide Bluetooth-like communications at a low power, Bluetooth Low Energy (BLE) is standardized and for example part of version 5.0 of the standard. BLE, too, allows for point-to-multipoint connections and/or mesh networks. Bluetooth that does not support BLE may be designated as Classical Bluetooth. In the context of this disclosure, the term Bluetooth may mean Classical Bluetooth or BLE.

The signal can be output when has been or directly after a communication link is established between the external electronic device and another electronic device. The signal can be output to indicate that a second communication link is established in addition to the first communication link. The signal can be representative of the establishment of the communication link between the external electronic device and the other electronic device. The signal can be indicative of a state change of the external electronic device from a first state, in which the external electronic device is exclusively connected to the electronic device, to a second state, in which the external electronic device is connected to the electronic device and to another electronic device.

In the context of this disclosure, a program may comprise or consist of instructions and/or instructions may form a program.

## Claims

1. An electronic device (101) comprising:
communication circuitry (230) for Bluetooth;
at least one processor (210) comprising processing circuitry; and
memory (220) storing instructions which when executed by the at least one processor (210) individually or collectively, cause the electronic device (101) to:
perform, using the communication circuitry (230), through a first communication link (111) between the electronic device (101) and an external electronic device (103, 104), a first periodic transmission to the external electronic device (103), according to a first transmission cycle, the first periodic transmission for outputting audio via a speaker (340) of the external electronic device (103, 104);
receive, using the communication circuitry (230), through the first communication link (111), from the external electronic device (103), a signal (704) indicating that the external electronic device (103) is operating in a multi-point state in which a second communication link (112) is established between the external electronic device (103) and another electronic device (102) while the first communication link (111) is established between the electronic device (101) and the external electronic device (103); and
based on the signal (704):
perform, using the communication circuitry (230), through the first communication link (111), a second periodic transmission to the external electronic device (103), according to a second transmission cycle longer than the first transmission cycle, the second periodic transmission for outputting audio via the speaker (340) of the external electronic device (103).

2. The electronic device (101) of claim 1, wherein a number of audio frames included in each of packets (530, 532) transmitted to the external electronic device (103) while performing the first periodic transmission is less than a number of audio frame included in each of packets (530, 532) transmitted to the external electronic device (103) while performing the second periodic transmission.

3. The electronic device (101) of claim 1 or 2, wherein a number of at least one packet (510-1, 510-2, 510-3) transmitted to the external electronic device (103) in each of first time intervals (501-1, 501-2, 501-3) corresponding to the first transmission cycle while performing the first periodic transmission is identical to a number of at least one packet (520) transmitted to the external electronic device (103) in each of second time intervals (502) corresponding to the second transmission cycle while performing the second periodic transmission, and
wherein a size of each of the at least one packet (510-1, 510-2, 510-3) transmitted to the external electronic device (103, 104) in each of the first time intervals (501-1, 501-2, 501-3) while performing the first periodic transmission is larger than a size of each of the at least one packet (520) transmitted to the external electronic device (103) in each of the second time intervals (502) while performing the second periodic transmission.

4. The electronic device (101) of claim 1 or 2, wherein a number of at least one packet (510-1, 510-2, 510-3) transmitted to the external electronic device (103, 104) in each of first time intervals (501-1, 501-2, 501-3) corresponding to the first transmission cycle while performing the first periodic transmission is less than a number of at least one packet (520) transmitted to the external electronic device (103) in each of second time intervals (502) corresponding to the second transmission cycle while performing the second periodic transmission, and
wherein a size of each of the at least one packet (510-1, 510-2, 510-3) transmitted to the external electronic device (103) in each of the first time intervals (501-1, 501-2, 501-3) while performing the first periodic transmission is larger than a size of each of the at least one packet (520) transmitted to the external electronic device (103) in each of the second time intervals (502) while performing the second periodic transmission.

5. The electronic device (101) of any of claims 1 to 4, wherein the instructions, when executed by the at least one processor (210) individually or collectively, further cause the electronic device (101) to:
while performing the second periodic transmission, identify a quality of the first communication link (111); and
based on the quality lower than a reference quality:
cease the second periodic transmission, and
perform, using the communication circuitry (230), through the first communication link (111), a third periodic transmission to the external electronic device (103), according to the second transmission cycle, the third periodic transmission for outputting the audio via the speaker (340) of the external electronic device (103), and
wherein a size of data transmitted to the external electronic device (103) per unit time according to the third periodic transmission is smaller than a size of data transmitted to the external electronic device (103) per unit time according to the second periodic transmission.

6. The electronic device (101) of any of claims 1 to 5, wherein the instructions, when executed by the at least one processor (210) individually or collectively, further cause the electronic device (101) to:
while performing the second periodic transmission, identify that a quality of the first communication link (111) is changed from a first quality lower than a reference quality to a second quality higher than the reference quality; and
maintain the second periodic transmission independently from change from the first quality to the second quality.

7. An external electronic device (103) comprising:
communication circuitry (330) for Bluetooth;
at least one processor (310) comprising processing circuitry; and
memory (320) storing instructions which when executed by the at least one processor (310) individually or collectively, cause the external electronic device (103) to:
perform, using the communication circuitry (330), through a first communication link (111) between the external electronic device (103) and an electronic device (101), a first periodic transmission to the electronic device (101), according to a first transmission cycle, the first periodic transmission for outputting audio via a speaker (340) of the external electronic device (103); and
provide, using the communication circuitry (330), through the first communication link (111), to the electronic device (101), a signal (704) indicating that the external electronic device (103) is operating in a multi-point state in which a second communication link (112) is established between the external electronic device (103) and another electronic device (102) while the first communication link (111) is established between the external electronic device (103) and the electronic device (101).

8. A method executed in an electronic device (101) with communication circuitry (230) for Bluetooth, the method comprising:
performing (401), using the communication circuitry (230), through a first communication link (111) between the electronic device (101) and an external electronic device (103), a first periodic transmission to the external electronic device (103), according to a first transmission cycle, the first periodic transmission for outputting audio via a speaker (340) of the external electronic device (103);
receiving (402), using the communication circuitry (230), through the first communication link (111), from the external electronic device (103), a signal (704) indicating that the external electronic device (103) is operating in a multi-point state in which a second communication link (112) is established between the external electronic device (103) and another electronic device (102) while the first communication link (111) is established between the electronic device (101) and the external electronic device (103); and
based on the signal (704), performing, using the communication circuitry (230), through the first communication link (111), a second periodic transmission to the external electronic device (103), according to a second transmission cycle longer than the first transmission cycle, the second periodic transmission for outputting audio via the speaker (340) of the external electronic device (103).

9. The method of claim 8, wherein a number of audio frame included in each of packets (530, 532) transmitted to the external electronic device (103) while performing the first periodic transmission is less than a number of audio frame included in each of packets (530, 532) transmitted to the external electronic device (103) while performing the second periodic transmission.

10. The method of claim 8 or 9, wherein a number of at least one packet (510-1, 510-2, 510-3) transmitted to the external electronic device (103) in each of first time intervals (501-1, 501-2, 501-3) corresponding to the first transmission cycle while performing the first periodic transmission is identical to a number of at least one packet (520) transmitted to the external electronic device (103) in each of second time intervals (502) corresponding to the second transmission cycle while performing the second periodic transmission, and
wherein a size of each of the at least one packet (510-1, 510-2, 510-3) transmitted to the external electronic device (103) in each of the first time intervals (501-1, 501-2, 501-3) while performing the first periodic transmission is larger than a size of each of the at least one packet (520) transmitted to the external electronic device (103) in each of the second time intervals (502) while performing the second periodic transmission.

11. The method of claim 8 or 9, wherein a number of at least one packet (510-1, 510-2, 510-3) transmitted to the external electronic device (103) in each of first time intervals (501-1, 501-2, 501-3) corresponding to the first transmission cycle while performing the first periodic transmission is less than a number of at least one packet (520) transmitted to the external electronic device (103) in each of second time intervals (502) corresponding to the second transmission cycle while performing the second periodic transmission, and
wherein a size of each of the at least one packet (510-1, 510-2, 510-3) transmitted to the external electronic device (103) in each of the first time intervals (501-1, 501-2, 501-3) while performing the first periodic transmission is larger than a size of each of the at least one packet (520) transmitted to the external electronic device (103) in each of the second time intervals (502) while performing the second periodic transmission.

12. The method of any of claims 8 to 11, further comprising:
while performing the second periodic transmission, identifying a quality of the first communication link (111), and
based on the quality lower than a reference quality, ceasing the second periodic transmission, and performing, using the communication circuitry (230), through the first communication link (111), a third periodic transmission to the external electronic device (103), according to the second transmission cycle, the third periodic transmission for outputting the audio via the speaker (340) of the external electronic device (103), and
wherein a size of data transmitted to the external electronic device (103) per unit time according to the third periodic transmission is smaller than a size of data transmitted to the external electronic device (103) per unit time according to the second periodic transmission.

13. The method of any of claims 8 to 12, further comprising:
while performing the second periodic transmission, identifying that a quality of the first communication link (111) is changed from a first quality lower than a reference quality to a second quality higher than the reference quality, and
maintaining the second periodic transmission independently from change from the first quality to the second quality.

14. A method executed in an external electronic device (103) with communication circuitry (330) for Bluetooth, the method comprising:
performing, using the communication circuitry (330), through a first communication link (111) between the external electronic device (103) and an electronic device (101), a first periodic transmission to the external electronic device (103), according to a first transmission cycle, the first periodic transmission for outputting audio via a speaker (340) of the external electronic device (103);
providing, using the communication circuitry (330), through the first communication link (111), to the electronic device (101), a signal (704) indicating that the external electronic device (103) is operating in a multi-point state in which a second communication link (112) is established between the external electronic device (103) and another electronic device (102) while the first communication link (111) is established between the electronic device (101) and the external electronic device (103).

15. A non-transitory computer-readable storage medium storing instructions,
wherein the instructions, when executed by at least one processor (210) of an electronic device (101) comprising communication circuitry (230) for Bluetooth, cause the processor (210) to execute the method of any of claims 8 to 12, or
wherein, when the instructions, when executed by at least one processor (310) of an electronic device (103) comprising communication circuitry (330) for Bluetooth, cause the processor (310) to execute the method of claim 14.
